# EUROPÄISCHE PATENTSCHRIFT

(11) **EP 3 283 544 B1**
(45) Veröffentlichungstag und Bekanntmachung des Hinweises auf die Patenterteilung: **09.06.2021**
(21) Anmeldenummer: 16718617.0
(22) Anmeldetag: 11.04.2016
(51) Int. Cl.: C08G 63/08, C08G 63/78, C08G 63/88, C08G 63/90

(54) **VERFAHREN ZUR KRISTALLISATION UND ABTRENNUNG NIEDERMOLEKULARER KOMPONENTEN AUS EINEM GRANULAT EINES KRISTALLISATIONSFÄHIGEN THERMOPLASTISCHEN MATERIALS SOWIE VORRICHTUNG HIERZU**
METHOD FOR CRYSTALLIZATION AND SEPARATION OF LOW-MOLECULAR COMPONENTS FROM A GRANULATE OF A CRYSTALLIZABLE THERMOPLASTIC MATERIAL AND DEVICE THEREFOR
PROCÉDÉ DE CRISTALLISATION ET DE SÉPARATION DE CONSTITUANTS DE FAIBLE POIDS MOLÉCULAIRE À PARTIR D'UN GRANULÉ D'UN MATÉRIAU THERMOPLASTIQUE CRISTALLISABLE ET DISPOSITIF ASSOCIÉ

(30) Priorität: 14.04.2015 DE 102015206688
(43) Veröffentlichungstag der Anmeldung: 21.02.2018
(73) Patentinhaber: Uhde Inventa-Fischer GmbH, 13509 Berlin (DE); thyssenkrupp AG, 45143 Essen (DE)
(72) Erfinder: HAGEN, Rainer, 13465 Berlin (DE); MÜHLBAUER, Udo, 10119 Berlin (DE)
(74) Vertreter: Pfenning, Meinig & Partner mbB
(86) Internationale Anmeldenummer: PCT/EP2016/057889
(87) Internationale Veröffentlichungsnummer: WO 2016/166048

(56) Entgegenhaltungen:
- EP-A1- 0 597 155
- EP-A2- 0 755 956
- WO-A1-2005/085318
- WO-A1-2005/115707

## Beschreibung

Die vorliegende Erfindung betrifft ein Verfahren zur Kristallisation eines Granulates und Abtrennung niedermolekularer Komponenten aus einem Granulat eines kristallisationsfähigen thermoplastischen Materials mit einer kristallinen Schmelztemperatur von mindestens 130 °C, bei dem ein Granulat des kristallisationsfähigen thermoplastischen Materials in einer Kristallisationsstufe zumindest partiell kristallisiert wird und anschließend in einer Abtrennungsstufe niedermolekulare Komponenten aus dem zumindest partiell kristallisierten Granulat zumindest teilweise abgetrennt werden, wobei die Kristallisation und die Abtrennung der niedermolekularen Komponenten bei unterschiedlichen Temperaturen durchgeführt werden, wobei die Kristallisation bei niedrigeren Temperaturen als die Abtrennung erfolgt, wobei das Granulat in der Kristallisationsstufe und in der Abtrennungsstufe von einem Gas durchströmt wird, wobei das Gas bevorzugt im Gegenstrom zu einer Förderrichtung des Granulats geführt wird. Zudem betrifft die vorliegende Erfindung eine Vorrichtung zur Durchführung des zuvor genannten Verfahrens.

PLA wird überwiegend durch Ringöffnungspolymerisation von Lactid in der Schmelze bei Endtemperaturen zwischen 160 und 200 °C hergestellt. Die Polymerisation führt zu einem chemischen Ring-Ketten-Gleichgewicht, in dem abhängig von der Endtemperatur zwischen 3 und 5% nicht umgesetztes Monomer vorliegt. Wahlweise kann die Polymerisation auch bei einem unvollständigen Umsatz abgebrochen werden, die Monomerkonzentration kann dann bis zu 20% oder mehr betragen, abhängig von wirtschaftlichen Überlegungen. In jedem Fall muss das nicht umgesetzte Monomer aus dem Polymer abgetrennt werden, um ein technisch verwendbares PLA herzustellen. Dafür ist ein Restmonomergehalt von < 0,5 % Bedingung, um bei der Verarbeitung aus der Schmelze Rauchentwicklung, Kontamination und Korrosion der Umgebung mit Lactid zu vermeiden. Außerdem beeinflussen größere Restmonomerkonzentrationen die mechanischen und thermischen Eigenschaften von Artikeln aus PLA ungünstig. Nicht zuletzt begünstigt Rest-Lactid im PLA die Aufnahme von Luftfeuchtigkeit und den hydrolytischen Abbau.

Die Abtrennung geschieht im industriellen Maßstab in der Regel durch Verdampfen im Vakuum (Vakuum-Entmonomerisierung). Für diesen Schritt sind die verschiedensten Apparate vorgeschlagen worden, unter anderem Entgasungsextruder, Dünnschichtverdampfer, Drehscheibenreaktoren.

Der industrielle Maßstab erfordert maximale Produktausbeute, so dass das abgetrennte Monomer in den Prozess zurückzuführen ist. Nach dem Verdampfen im Vakuum muss das Monomer also in geeigneter Form abgeschieden und gesammelt werden. Der Tripelpunkt des Monomers gibt vor, ob die Abscheidung in fester oder flüssiger Form geschehen kann. Will man das Lactid in flüssiger Form abscheiden darf also das anwendbare Vakuum bei der Abtrennung aus der Schmelze nicht unter dem Druck des Tripelpunkts liegen. Damit ist das anwendbare Vakuum begrenzt und somit der Restmonomergehalt. Arbeitet man unterhalb des Drucks am Tripelpunkt, erreicht man niedrigeren Restmonomergehalt in der Schmelze, muss aber die Abscheidung des Lactids in fester Form in Kauf nehmen. Das ist in der Regel mit diskontinuierlichem Betrieb der Lactidabscheidung verbunden.

In der EP 0 499 747 A2 werden zur Monomerabtrennung Fallstrangentgaser, Entgasungsextruder oder Dünnschichtverdampfer vorgeschlagen. Die Dämpfe aus der Entgasung werden in einem oder mehreren hintereinandergeschalteten Kondensatoren niedergeschlagen. Zur Vakuumerzeugung werden ein-oder mehrstufige, nicht näher bezeichnete Aggregate verwendet, die ein Vakuum bis zu 0,002 atm. (= 2 mbar) erzeugen. Um den Partialdruck des abzutrennenden Lactids zu reduzieren und damit die Verdampfung zu erleichtern und den Restmonomergehalt im Polymer zu senken, wird die Zugabe von Schleppmitteln wie Stickstoff, Toluol, Ethylbenzol als Möglichkeit genannt. Obwohl nicht explizit angegeben, sprechen die Verwendung des Begriffs "Kondensator" und der Druck von 2 mbar dafür, dass die Dämpfe in flüssiger Form niedergeschlagen werden. Damit ist zugleich das anwendbare Vakuum und der Restmonomergehalt begrenzt. Nachteil dieses Verfahrens ist ein vergleichsweise hoher Restmonomergehalt nach der Monomerverdampfung, wenn das abgetrennte Lactid oberhalb seines Tripelpunkts in flüssiger Form abgeschieden wird. Wählt man einen Druck unterhalb des Tripelpunkts, muss das Lactid in fester Form abgeschieden werden. Dazu werden Desublimatoren benötigt, die diskontinuierlich betrieben werden müssen.

Die WO 98/36012 bevorzugt zur Vakuumverdampfung einen Fallstrangentgaser, wobei die Polymerschmelze in Form von Fäden in einem offenbar nicht unter Vakuum stehenden Behälter nach unten fällt. Heißes Inertgas wie Stickstoff oder trockene Luft wird in den Entgaser eingeblasen, um die Verdampfung des Lactids von der Oberfläche der fallenden Fäden zu erleichtern. Das lactidhaltige heiße Gas wird nach Verlassen des Entgasungsapparats schnell auf 20-40°C abgekühlt, wobei Lactid als kristalliner Staub ausfällt. Vorzugsweise geschieht das in einer "Kristallisationskammer" durch Vermischen mit kalter Luft. Nachteil dieses Verfahrens ist die Vermischung des Lactids mit großen Mengen an Inertgas, die es erschweren, das Lactid vollständig zurückzugewinnen und sehr große Apparate zur Trennung des Gases vom Lactidstaub erfordern (Zyklon, Gasfilter). Wichtigster Nachteil ist indessen, dass bei der Entmonomerisierung Atmosphärendruck herrscht und demnach ein Restmonomergehalt von 0,5% unerreichbar ist. Abgesehen davon erzeugt der Fallstrangapparat zwar eine große Oberfläche, die Oberflächenerneuerung ist jedoch eng begrenzt auf die Umgebung der Düsenbohrungen, aus denen die Schmelze austritt. Die Stoffaustauschleistung insgesamt ist deshalb begrenzt und Restmonomerkonzentrationen in der Größenordnung von 0,5% werden auch im Vakuum nicht erreicht.

Die WO 2005/115707 A1 beschreibt ein Verfahren zur Kristallisation von amorphen Polymeren deren Tg unterhalb des Kristallitschmelzpunktes liegt. Amorphe oder teilkristalline Granulatkörner des Polymeren werden für eine Dauer von mindestens 30 Sekunden in Wasser einer Temperatur im Kristallisationsbereich des Polymeren ausgesetzt. Beispielsweise wird in diesem Dokument die Herstellung von Polymilchsäure beschrieben, wobei das Polymer geschmolzen, extrudiert, mit Wasser gekühlt und granuliert wird. Das amorphe Granulat wird im Wasserbad kristallisiert und dann getrocknet.

Die WO 2005/085318 A1 beschreibt ein Verfahren zur Herstellung von Polyestern, das einen Kristallisationsschritt enthält. Die Kristallisation wird bevorzugt in mindestens zwei Stufen durchgeführt. Dabei kann die erste Stufe der Kristallisation bei einer niedrigeren Temperatur durchgeführt werden als die zweite Stufe. Die erste Stufe der Kristallisation erfolgt bei einer Temperatur von etwa 150 °C bis etwa 210 °C und die zweite Stufe der Kristallisation bei einer Temperatur von etwa 180 °C bis etwa 230 °C.

Die EP 0 597 155 A1 beschreibt ein Verfahren und eine Vorrichtung zum kontinuierlichen Kristallisieren von Kunststoffgranulat, bei dem das Granulat in einen Behälter eingeführt wird und eine Granulatschüttung bildet, die sich durch die Schwerkraft nach unten bewegt. Im Gegenstrom wird durch die Granulatschüttung ein heißes Gas als Primärgas geführt. Durch eine Rührvorrichtung wird das Granulat bewegt. Zusätzlich ist eine Gaszufuhreinrichtung für Sekundärgas vorgesehen, die Gas mit hoher Geschwindigkeit an mehreren über den Querschnitt des Behälters verteilten Stellen in den oberen Bereich der Granulatschüttung einleitet. Das Sekundärgas kann heiß oder kalt sein.

**Die** EP 755 956 B1 beschreibt einen Prozess, bei dem die aus der Polymerisation kommende PLA-Schmelze ohne vorherige Entmonomerisierung granuliert wird, das Granulat kristallisiert und das darin enthaltene Monomer bei Temperaturen unterhalb des kristallinen Schmelzpunkts mit Hilfe eines Inertgasstroms aus dem Granulat verdampft wird.

Nachteil dieses Prozesses ist die lange Verweilzeit des Granulats in den beiden Apparaten, die zwischen 10 und 100 h, vorzugsweise zwischen 20 und 50 h betragen. Sie ist hauptsächlich auf die nicht optimale Temperatur von 120 bis 140°C zurückzuführen, die in dieser Anordnung möglich zu sein scheint.

Für das Abscheiden des abgetrennten Monomers aus der Gasphase wird Kondensation in fester Form (Desublimatoren) oder flüssiger Form erwähnt. Als geeignete Apparate hierfür werden Kondensator, Zyklon, Filter oder ein mit Milchsäure oder geschmolzenem Lactid betriebener Wäscher genannt.

Lactid kann durch Waschen mit flüssigem Lactid aus dem Inertgasstrom auf diese Weise nicht vollständig abgeschieden werden. Bei der Wäsche des Abgases mit geschmolzenem Lactid verbleibt wegen der hohen Temperatur bei der Wäsche (> 100°C wegen des Lactidschmelzpunkts) anschließend zu viel der Waschflüssigkeit als Dampf im Inertgasstrom. Bei Kreislaufführung des Inertgases muss dieses zwangsläufig abgekühlt werden, Lactid desublimiert, verschmutzt Rohrleitungen, Armaturen und Gebläse und verursacht deren schnelle Zerstörung durch Abrasion.

Abscheidung unterhalb des Schmelzpunkts des Lactids führt zu staubförmigen Restmengen, die ein Aerosol bilden und mit den genannten Apparaten nicht vollständig aus dem Inertgasstrom abgeschieden werden können. Lactidstaub führt schon in geringen Mengen zur Zerstörung von Gebläsen und anderen Maschinen infolge von Abrasion beweglicher Teile.

Die Schrift sieht wohl deshalb auch keine Kreislaufführung des Inertgases vor. Das ist ein erheblicher Nachteil, da sowohl das Gas als auch das darin enthaltene Monomer als Verlust zu verbuchen sind wodurch die Wirtschaftlichkeit des Verfahrens leidet.

Die Schrift kennt das Problem der Granulatagglomeration während der Kristallisation und führt dieses Phänomen auf ein Aufschmelzen und Verkleben durch exzessive Temperaturerhöhung infolge der freiwerdenden Kristallisationswärme zurück. Sie schweigt jedoch über den Zusammenhang dieses Phänomens mit der Kristallisationsgeschwindigkeit und mit der kristallinen Schmelztemperatur des PLAs. Um die Agglomeration zu verhindern, gibt sie als einzige Maßnahme an, die Kristallisation "in einem Zustand auszuführen, in dem hohe Fließfähigkeit des PLA-Granulats aufrechterhalten wird". Wie dies zu geschehen hat wird nicht erläutert und nur auf geeignete Apparate verwiesen, die das leisten.

Die Schrift macht keine Angaben darüber, wie das abgeschiedene Lactid in die Polymerisation zurückgeführt wird und an welcher Stelle im Prozessablauf der Polymerisation das geschieht.

Eine Aufgabe des erfindungsgemäßen Verfahrens ist es, ausgehend von EP 755 956 B1, den apparativen Aufwand (die Anzahl der Apparate und/oder die Verweilzeit zur Abtrennung des Monomers aus dem PLA-Granulat) zu reduzieren. Eine weitere Aufgabe ist, das Problem der Agglomeratbildung während der Kristallisation des PLA-Granulats mit weniger aufwendigen Mitteln zu vermeiden. Eine dritte Aufgabe der Erfindung ist es, das aus dem Polymer abgetrennte Monomer ohne wesentliche Verluste im kontinuierlichen Betrieb vollständig abzuscheiden und in den PLA-Prozess zurückzuführen und das Inertgas im Kreislauf zu führen. Übergeordnetes Ziel ist, sowohl die Kosten für Apparate als auch für den Betrieb zu senken und so eine größere Wirtschaftlichkeit der PLA-Herstellung zu erreichen.

Diese Aufgabe wird mit einem Verfahren mit den Merkmalendes Patentanspruchs 1 gelöst. Zudem wird die zuvor genannte Aufgabe durch eine Vorrichtung mit den Merkmalen des Patentanspruchs 16 gelöst. Die jeweiligen abhängigen Patentansprüche stellen dabei vorteilhafte Weiterbildungen dar.

Gemäß der Erfindung wird das Gas zunächst in die Abtrennungsstufe aufgegeben und nach Durchströmen des Granulates in der Abtrennungsstufe der Abtrennungstufe entnommen und anschließend in die Kristallisationsstufe aufgegeben, wobei das Gas das Granulat in der Kristallisationsstufe durchströmt, wobei das der Abtrennungstufe entnommene Gas vor Aufgabe in die Kristallisationszone mit einem Gas niedrigerer Temperatur vermischt wird oder abgekühlt wird und das erzeugte Gasgemisch oder das abgekühlte Gas in die Kristallisationsstufe aufgegeben wird.

Die Kristallisation erfolgt dabei in der zuvor beschriebenen Kristallisationsstufe. Das beim Verfahren eingesetzte Granulat kann somit vollständig amporph sein, ebenso ist es jedoch auch möglich, dass das Granulat bereits eine gewisse Teilkristallinität aufweist. Diese Teilkristallinität kann beispielsweise durch eine bereits bei einer zur Herstellung des Granulats vorgenommenen Granulierung erfolgende Teilkristallisierung des thermoplastischen Materials oder durch eine separate, sich an den Granulierschritt anschließende Teilkristallisationsstufe erfolgen. Insbesondere eignet sich zur Erreichen einer Teilkristallinität die sogenannte Latentwärmekristallisation.

Überraschenderweise wurde erkannt, dass mit der erfindungsgemäßen Verfahrensweise, bei der eine Entkopplung der Temperatur in der Kristallisationsstufe von der Temperatur in der Abtrennungsstufe vorgenommen wird, die Verweilzeit des Granulats insgesamt verkürzt werden kann. Hierdurch kann die obere Temperaturgrenze für die Entmonomerisierung insbesondere nach oben hin angehoben werden, beispielsweise bis 5°C unterhalb des Schmelzpunktes des thermoplastischen Materials, was zu kürzerer Verweilzeit führt.

Gemäß einer besonders bevorzugten Ausführungsform wird das erfindungsgemäße Verfahren kontinuierlich betrieben, in dem kontinuierlich Granulat des kristallisationsfähigen thermoplastischen Materials in die Kristallisationsstufe aufgegeben wird und nach Kristallisation und erfolgter Abtrennung der niedermolekularen Komponenten kontinuierlich aus der Stufe ausgetragen wird.

Eine bevorzugte Ausführungsform der erfindungsgemäßen Verfahrensführung sieht vor, dass die Kristallisation bei einer Temperatur unterhalb von 20 K unterhalb der kristallinen Schmelztemperatur des kristallisationsfähigen thermoplastischen Materials, bevorzugt bei einer Temperatur zwischen 80 K bis 20 K unterhalb der kristallinen Schmelztemperatur des kristallisationsfähigen thermoplastischen Materials durchgeführt wird.

Alternativ oder zusätzlich hierzu ist es ebenso bevorzugt, wenn die Abtrennung der niedermolekularen Komponenten bei einer Temperatur oberhalb der bei der Kristallisation eingesetzten Temperatur, bevorzugt bei einer Temperatur oberhalb der bei der Kristallisation eingesetzten Temperatur bis zu maximal 5 K unterhalb der kristallinen Schmelztemperatur des kristallisationsfähigen thermoplastischen Materials durchgeführt wird.

Weiter ist gemäß dem erfindungsgemäßen Verfahren das Gas bevorzugt Stickstoff und/oder getrocknete Luft, und weist weiter bevorzugt einen Taupunkt von < -20 °C, besonders bevorzugt von < - 40 °C auf.

Weiter bevorzugt ist beim erfindungsgemäßen Verfahren, dass das erzeugte Gasgemisch oder das abgekühlte Gas auf eine Temperatur unterhalb von 20 K unterhalb der kristallinen Schmelztemperatur des kristallisationsfähigen thermoplastischen Materials eingestellt wird. Das Gas niederer Temperatur hat dabei vorteilhaft die gleiche Qualität wie das eingesetzte Gas, insbesondere hinsichtlich seiner Zusammensetzung und/oder hinsichtlich des Taupunktes.

Insbesondere kann das Granulat nach Durchlaufen der Abtrennungsstufe in eine Kühlstufe aufgegeben und gekühlt werden, vorzugsweise auf Temperaturen von < 80 °C, weiter bevorzugt auf < 60 °C, besonders bevorzugt auf < 50 °C.

Die Kühlung des Granulates kann dabei indirekt in einem Rohrbündelwärmetauscher mit einem Gas, dessen Temperatur geringer als die Granulattemperatur ist, erfolgen, wobei das Granulat in den Rohren und das Gas im Kreuz-Gegenstrom um die Rohre fließt.

Alternativ hierzu ist es ebenso bevorzugt und möglich, das Kühlen des Granulates direkt mittels Durchströmen des Granulates mit einem Gas, dessen Temperatur geringer als die Granulattemperatur ist, zu bewerkstelligen.

Gemäß einer weiter bevorzugten Ausführungsform ist vorgesehen, dass das Gas nach Durchströmen des Granulats in der Kühlstufe auf eine Temperatur von maximal 20 K unterhalb der kristallinen Schmelztemperatur des kristallisationsfähigen thermoplastischen Materials bis maximal 5 K unterhalb der kristallinen Schmelztemperatur des kristallisationsfähigen thermoplastischen Materials erwärmt und in die Abtrennungsstufe aufgegeben wird. Hierbei wird zumindest ein Teil des Gases der Kühlstufe entnommen, erwärmt und in die Abtrennstufe aufgegeben.

Der Massenstrom des in die Abtrennungsstufe (oder ggfs. zuvor in die Kühlstufe) aufgegebenen Gases entspricht bevorzugt mindestens dem 2,0 -fachen, bevorzugt dem 2,5 bis 5,0-fachen, besonders bevorzugt dem 2,8 bis 3,2-fachen des Massenstroms des aufgegebenen Granulats.

Alternativ oder zusätzlich hierzu ist es ebenso möglich, dass die als Produkt des Massenstromes und der spezifischen Wärmekapazität des Gases berechnete Wärmekapazität des in die Abtrennungsstufe oder die Kühlstufe aufgegebenen Gasstromes größer gewählt wird als die als Produkt des Massenstromes und der spezifischen Wärmekapazität des kristallisationsfähigen thermoplastischen Materials berechnete Wärmekapazität des Granulatstromes, bevorzugt das Verhältnis der Wärmekapazität des Gasstromes und der Wärmekapazität des Granulatstromes auf bevorzugt zwischen 1,25 und 2,5 eingestellt wird.

Bevorzugt verweilt das Granulat zwischen 0,5 und 10 h, bevorzugt zwischen 1 und 5 h in der Kristallisationsstufe und/oder die Kristallisation wird bis zu einem Kristallisationsgrad von 10 bis 80 %, vorzugsweise zwischen 20 und 70 % durchgeführt.

In der Abtrennstufe ist die Verweilzeit des Granulats bevorzugt zwischen 1 und 30 h, besonders bevorzugt zwischen 1 und 10 h.

Insbesondere wird das Granulat in der Kristallisationsstufe mechanisch bewegt, bevorzugt gerührt.

Die erfindungsgemäße Verfahrensführung ermöglicht, dass die niedermolekularen Komponenten bis auf einen Gehalt von unter 1 Gew.-%, bevorzugt von unter 0,5 Gew.-%, besonders bevorzugt von unter 0,2 Gew.-% abgetrennt werden.

Insbesondere ist das thermoplastische Material ausgewählt aus der Gruppe bestehend aus Polymilchsäure und Copolymeren von Milchsäure.

Copolymere von Polymilchsäure stellen dabei Copolymere dar, die neben Milchsäureeinheiten noch weitere, mit Milchsäure oder Lactid copolymerisierbare bzw. copolykondensierbare Monomereinheiten enthalten, ein Beispiel hierfür ist Glycolid und/oder ε-Caprolacton, das mit Lactid zu den entsprechenden Copolymeren copolymerisiert werden kann.

Bevorzugt sind die entsprechend beim erfindungsgemäßen Verfahren einsetzbaren Polymilchsäuren ausgewählt aus kristallisierbaren Polymilchsäuren, insbesondere Polymilchsäuren ausgewählt aus der Gruppe bestehend aus Poly-L-Milchsäure mit einem maximalen Gehalt von 6 % D- Milchsäureeinheiten oder Poly-D-Milchsäure mit einem maximalen Gehalt von 6 % L-Milchsäureeinheiten. Die D-Milchsäureeinheiten in der Poly-L-Milchsäure können dabei aus D-Lactid oder meso-Lactid stammen, die in den Edukten für die Herstellung der Poly-L-Milchsäure enthalten sind oder bei der Herstellung durch Racemisierung eines optisch aktiven Kohlenstoffatoms des L-Lactids entstehen. Entsprechendes gilt für den Gehalt der L-Milchsäureeinheiten in Poly-D-Milchsäure.

Abzutrennende niedermolekulare Komponenten sind dabei bevorzugt ausgewählt aus der Gruppe bestehend aus Lactid, Milchsäure sowie Comonomeren, insbesondere L-Lactid, D-Lactid und meso-Lactid.

Das Verfahren ermöglicht somit insbesondere die Abtrennung von Lactid und/oder Milchsäure aus Polymilchsäure oder Copolymeren mit einer kristallinen Schmelztemperatur von mindestens 130°C.

Eine weitere bevorzugte Ausführungsform des erfindungsgemäßen Verfahrens sieht vor, dass das Granulat unmittelbar vor seiner Aufgabe in die Kristallisationszone durch eine Polymerisationsreaktion oder Polykondensationsreaktion in der Schmelze und anschließende Granulation des erhaltenen Polymers als amorphes oder teilkristallines Granulat (durch Latentwärmekristallisation) hergestellt wird.

In der Schmelze enthaltene niedermolekulare Komponenten können hierbei vor der Granulation teilweise entfernt werden, insbesondere mittels eines Fallstrangverdampfers. Das teilweise Entfernen erfolgt dabei bevorzugt unter gegenüber Normalbedingungen vermindertem Druck, z.B. im Vakuum, wobei die enthaltenen niedermolekularen Verbindungen in die Gasphase übergehen, z.B. durch Verdampfen.

Weiter ist es bevorzugt, wenn der Gasstrom nach Entnahme aus der Kristallisationsstufe oder der Abtrennstufe einer Aufreinigung unterzogen wird, wobei im Gasstrom enthaltenes niedermolekulares Material zumindest teilweise abgetrennt wird, wobei bevorzugt das aufgereinigte Gas erneut in die Abtrennstufe oder die Kühlstufe aufgegeben wird und/oder abgetrennte niedermolekulare Komponenten zur Herstellung des Polymers wiederverwendet werden .

Die Erfindung betrifft zudem eine Vorrichtung zur Durchführung einer Kristallisation und Abtrennung niedermolekularer Komponenten aus einem Granulat eines kristallisationsfähigen thermoplastischen Materials, umfassend
a) eine Kristallisationszone für ein Granulat eines kristallisationsfähigen thermoplastischen Materials, die einen Einlass und einen Auslass für das Granulat des kristallisationsfähigen thermoplastischen Materials aufweist,
b) eine Abtrennungszone zur Abtrennung niedermolekularer Komponenten aus dem Granulat des kristallisationsfähigen thermoplastischen Materials, die einen Einlass und einen Auslass für das Granulat des kristallisationsfähigen thermoplastischen Materials aufweist,
wobei die Abtrennungszone der Kristallisationszone nachgeschaltet ist und die Kristallisationszone und die Abtrennungszone derart ausgestaltet sind, dass die Kristallisation und die Abtrennung der niedermolekularen Komponenten bei unterschiedlichen Temperaturen erfolgt, insbesondere die Kristallisation bei niedrigeren Temperaturen durchgeführt wird als die Abtrennung der niedermolekularen Komponenten, wobei der Granulatauslass der Abtrennungszone in einen Granulateinlass eines Granulatkühlers mündet, wobei der Granulatkühler eine Zufuhr für das Kühlgas aufweist, wobei der Granulatkühler im Bereich des Granulateinlasses eine Abzugsmöglichkeit für Gas umfasst, die in eine Zuführung für erwärmtes Gas der Abtrennungszone mündet.

Eine bevorzugte Ausführungsform der Vorrichtung sieht vor, dass die Abtrennungszone eine Zuführung für erwärmtes Gas aufweist, die bevorzugt am Granulatauslass der Abtrennungszone oder in der Nähe des Granulatauslasses angeordnet ist, wobei der Zuführung weiter bevorzugt ein Gaserhitzer vorgeschaltet ist.

Weiter ist es vorteilhaft, wenn die Kristallisationszone und die Abtrennungszone in fluidischer Verbindung stehen, wobei ein Transport des Granulats vom Auslass der Kristallisationszone zum Einlass der Abtrennungszone und ein Transport des Gases aus der Abtrennungszone zur Kristallisationszone gewährleistet sind.

Bevorzugt ist zudem, dass die Zuführung am Granulatauslass oder in der Nähe des Granulatauslasses angeordnet ist, wobei der Zuführung weiter bevorzugt ein Gaserhitzer vorgeschaltet ist, wobei die Abzugsmöglichkeit bevorzugt in den Gaserhitzer mündet.

Die Kühlwirkung des Granulatkühlers kann weiter verbessert werden, indem der Granulatkühler mindestens ein zusätzliches Mittel zur Unterstützung der Kühlung des Granulates aufweist. Dies kann beispielsweise durch rohrbündelartige Einbauten erfolgen, wobei Granulat vertikal durch die Rohre des Rohrbündels geleitet wird. In die Zwischenräume zwischen den Rohren bzw. um die Rohre herum wird ein Gas oder eine Flüssigkeit zur Kühlung der Rohre und somit des Granulats geleitet. Der Raum um die Rohre kann im oberen Teil des Kühlers mit Luft, im unteren mit Wasser beaufschlagt werden, wobei der Raum um die Rohre durch eine waagrechte Trennwand zweigeteilt ist. Im oberen Teil ist dann eine Zuführung und Abführung für Luft, im unteren für Wasser nötig.

Die Luft- und Wasserkühlung kann auch in zwei voneinander separaten Kühlern geschehen. Die Wasserkühlung ist in Fließrichtung des Granulats stets nach der Luftkühlung angeordnet und hat nur ergänzende Funktion, falls die gewünschte Granulattemperatur von 50°C mit Luft allein nicht erreicht wird. Der Kühler kann auch aus zwei separaten Teilen bestehen, wobei der obere das Granulat mit Luft im direkten Kontakt kühlt, der untere mit Wasser im indirekten Kontakt wie oben.

Alternativ oder zusätzlich hierzu ist es ebenso möglich, in den Innenraum des Granulatkühlers kühlende Einbauten, die mit dem Granulat in physischen Kontakt kommen und die vom Granulat durchströmt oder umspült werden können, zu integrieren.

Die Kristallisationszone kann einen Gasauslass aufweisen, der in eine Waschvorrichtung zur Abtrennung niedermolekularer Komponenten aus dem Gasstrom mündet, wobei bevorzugt der Waschvorrichtung ein Flüssigkeitsabscheider und/oder ein Gastrockner nachgeschaltet ist, mittels derer der Gasstrom von Flüssigkeit befreit wird, wobei der Gasstrom nach Abscheiden und/oder Trocknung von Flüssigkeit erneut in den Granulatkühler und die Kristallisationszone aufgegeben wird. Dem Flüssigkeitsabscheider und/oder Gastrockner ist weiter bevorzugt ein Kühler vorgeschaltet, mit dem Flüssigkeit aus dem Gas vor Eintritt in den Flüssigkeitsabscheider und/oder ein Gastrockner auskondensiert werden kann. Hierdurch wird die Trocknung des Gases erleichtert.

Insbesondere ist es vorgesehen, dass die Kristallisationszone ein Mittel zur mechanischen Bewegung eines in der Kristallisationszone befindlichen Bettes eines Granulates eines kristallisationsfähigen thermoplastischen Materials aufweist, vorzugsweise einen Granulatrührer.

Ferner ist es vorteilhaft, wenn Kristallisationszone, Abtrennungszone und bevorzugt der Granulatkühler gemeinsam in einem Schachtapparat angeordnet sind. Hierbei sind bevorzugt Kristallisationszone, Abtrennungszone und Granulatkühler vertikal übereinander in einem Schachtapparat angeordnet, wobei die Kristallisationszone mit der Abtrennungszone über ein Lochblech in Verbindung steht, wobei das Lochblech konisch ausgestaltet ist und eine mittige Öffnung aufweist, über die das Granulat von der Kristallisationszone in die Abtrennungszone überführt werden kann.

Alternativ hierzu ist es ebenso bevorzugt, dass Kristallisationszone und Abtrennungszone getrennt voneinander angeordnet sind und über eine Granulatleitung sowie eine Gasleitung miteinander in fluidischer Verbindung stehen, wobei bevorzugt Abtrennungszone und Granulatkühler in einem Schachtapparat angeordnet sind.

Zudem kann vorgesehen sein, dass dem Granulateinlass der Kristallisationszone eine Granuliervorrichtung zur Erzeugung eines Granulates aus einer Schmelze eines kristallisationsfähigen thermoplastischen Materials vorgeschaltet ist, deren Auslass über eine Granulatleitung mit dem Einlass der Kristallisationszone in fluidischer Verbindung steht, wobei bevorzugt der Granuliervorrichtung ein Reaktor zur Erzeugung einer Schmelze eines kristallisationsfähigen thermoplastischen Materials vorgeschaltet ist, wobei ggf. zwischen Reaktor und Granulator eine Vorrichtung zur teilweisen Abtrennung niedermolekularer Komponenten aus der Schmelze des kristallisationsfähigen thermoplastischen Materials, insbesondere ein Fallstrangverdampfer angeordnet ist.

Die vorliegende Erfindung wird anhand der nachfolgenden Ausführungen näher erläutert, ohne die Erfindung auf spezielle Details zu beschränken. Die Erfindung wird nachfolgend am Beispielsfall der Abtrennung von Lactiden aus Polymilchsäure beschrieben, dies ist allerdings rein exemplarisch. Die Erfindung lässt sich ebenso mit anderen kristallisierbaren thermoplastischen Polymeren unter Abtrennung enthaltener flüchtiger, niedermolekularer Verbindungen durchführen.

Gemäß der vorliegenden Erfindung sind insbesondere drei Ausführungsformen möglich, nach denen das erfindungsgemäße Verfahren durchgeführt werden kann.

Gemäß einer ersten Ausführungsform (nachfolgend Ausführungsform a) bezeichnet), erfolgt die Kristallisation und die Entmonomerisierung bevorzugt in einem vertikalen Schachtapparat, wobei die Kristallisationszone oberhalb der Entmonomerisierungszone angeordnet ist.

Eine Ausführungsform b) sieht vor, dass Entmonomerisierung und Kristallisation bevorzugt in getrennten Vorrichtungen durchgeführt werden, wobei die Kristallisationszone der Entmonomerisierung vorgeschaltet ist.

Die nachfolgend im Detail beleuchtete Ausführungsform c) beruht dabei maßgeblich auf der Ausführungsform a), hierbei wird eine Schmelze eines thermoplastischen Materials, wie beispielsweise Polymilchsäure, vor der Granulierung bereits teilweise entmonomerisiert.

### Ablauf des Verfahrens nach Ausführungsform a)

Die eingangs genannte Aufgabe wird insbesondere gelöst durch ein Verfahren, bei dem das monomerhaltige PLA nach der Herstellung durch Polymerisation granuliert und das amorphe Granulat in einem einzigen vertikalen Schachtapparat mittels eines inerten Gasstroms erwärmt und kristallisiert und unterhalb des kristallinen Schmelzpunkts entmonomerisiert wird (Ausführungsform a). Die Verweilzeit wird verkürzt, indem die Granulattemperatur bei der Kristallisation und bei der Entmonomerisierung entkoppelt wird. Dadurch kann die obere Temperaturgrenze für die Entmonomerisierung hinausgeschoben werden bis auf 5°C unterhalb des PLA-Schmelzpunkts, was zu kürzerer Verweilzeit führt.

Agglomeration im oberen Teil des Apparats, in dem die Kristallisation abläuft, wird mit einem Rührer mit vertikaler Achse verhindert. Dabei wird das Granulat durch geeignete Führung des Inertgases während der Kristallisation auf eine Temperatur eingestellt, die mindestens 20°C unterhalb des Schmelzpunkts des zu kristallisierenden PLAs liegt. In dem unterhalb der Kristallisationszone liegenden Bereich des Schachtapparats wird die Temperatur des Granulats auf bis zu 5°C unterhalb des kristallinen Schmelzpunkts erhöht und die Entmonomerisierung bei entsprechend der erhöhten Temperatur verkürzter Verweilzeit zu Ende geführt.

Das den Schachtapparat verlassende, mit Monomer beladene Inertgas wird in einem Gaswäscher mit Wasser abgekühlt und gewaschen. Dabei geht das Monomer vollständig in das Wasser über. Es wird als wasserhaltiger Schlamm oder Filterkuchen aus dem Wäscherkreislauf entnommen und in den PLA-Prozess zurückgeführt. Das vollständig gereinigte Inertgas wird im Kreislauf geführt, so dass weder nennenswerte Verluste an Inertgas noch an Lactid in Kauf genommen werden müssen.

Es wurde gefunden, dass der Restmonomergehalt im Granulat von 0,2% in einer Verweilzeit des Granulats im Apparat von weniger als 20 Stunden erreicht werden kann. Das Verfahren ermöglicht eine bezüglich Investitionskosten (Anzahl der benötigten Apparate) und Betriebskosten (keine Vakuumerzeugung, keine Lactid- und Inertgasverluste) besonders wirtschaftliche Entmonomerisierung von PLA.

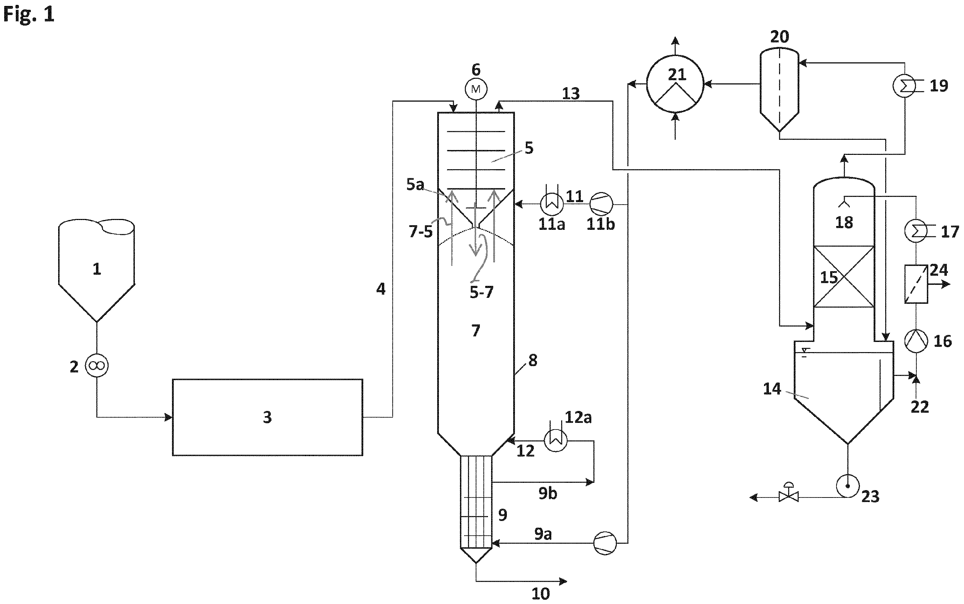

Der Ablauf des Verfahrens gemäß Ausführungsform a) ist in Fig. 1 dargestellt. In einer Polymerisationsanlage (nicht dargestellt) wird 90%ige Milchsäure durch Polykondensation mit anschließender Depolymerisation des entstandenen Oligomers zu Lactid verarbeitet. Das Lactid wird nach Reinigung durch Rektifikation durch ringöffnende Polymerisation in PLA umgewandelt. Der Lactid-Gehalt am Ende der Polymerisation kann zwischen 2% und 20% liegen, d. h. zwischen einem Monomergehalt, der durch das Ring-Kettengleichgewicht von PLA bei der verwendeten Polymerisationstemperatur gegeben ist und einem Monomergehalt, der durch vorzeitigen Abbruch der Polymerisation eingestellt wird. Die Reaktion kann in einer kontinuierlichen Anlage z. B. durch Erhöhen des Schmelzestroms bei vorgegebenem Reaktorvolumen und dadurch reduzierter Verweilzeit abgebrochen werden oder durch Verwenden einer niedrigen Temperatur, bei der die im Reaktor vorhandene Verweilzeit nicht ausreicht, um den Gleichgewichtswert der Lactidkonzentration zu erreichen. Für die Ausführungsform a) wird ein Monomergehalt bis zu 5% bevorzugt.

Auf den Monomeranteil kann im Interesse der Wirtschaftlichkeit nicht verzichtet werden. Nach seiner Abtrennung aus dem Produkt muss er zurückgewonnen und in den Herstellungsprozess des PLAs zurückgeführt werden.

Die monomerhaltige Schmelze wird aus dem Polymerisationsreaktor **1** mittels einer Zahnradpumpe **2** abgezogen und einer Granuliervorrichtung **3** zugeführt. Als Granuliervorrichtung eignet sich eine Unterwasser-Heißabschlag-Granulierung, eine Unterwasser-Stranggranulierung oder jede andere Granuliervorrichtung, die Granulat erzeugt mit einer mittleren Partikelmasse zwischen 5 mg und 100 mg. Die Partikelform kann kugel-, zylinder- oder prismenförmig sein, sie spielt für die Wirksamkeit des Verfahrens keine Rolle. Je nach Ausführungsform der Granulierung kann das Granulat in kristalliner oder in amorpher Form entstehen. Im Folgenden wird das Verfahren für amorphes Granulat beschrieben.

Das amorphe Granulat wird über eine Granulatleitung **4** zum Einlass eines Schachtapparats **8** gefördert. Das Granulat fließt als Wanderbett durch den Apparat im Gegenstrom zu einem Inertgas, das die Aufgaben der Abführung des Monomers und des Wärmetransports übernimmt. Als Inertgas eignen sich Gase, die PLA unter den Temperaturen des Prozesses nicht schädigen, insbesondere keine Kettenspaltungsreaktion (Molmassenabbau), Oxidation oder Verfärbung bewirken. Als geeignet haben sich insbesondere Stickstoff und getrocknete Luft (Taupunkttemperatur < -20°C, vorzugsweise < -40°C) erwiesen.

Der Schachtapparat **8** enthält drei Zonen in Stromrichtung des Granulats: den Kristallisator **5,** die Entmonomerisierung **7** und den Granulatkühler **9.** Der Kristallisator **5** überführt das amorphe Granulat in den teilkristallinen Zustand. In der Entmonomerisierungszone **7** stellt sich der gewünschte Restmonomergehalt im Granulat ein. Der Granulatkühler **9** senkt die Temperatur von der Prozesstemperatur ab auf eine Temperatur unterhalb des Glasübergangs (unter 60°C, je nach optischer Reinheit des zur Polymerisation verwendeten Lactids auch bis unter 50°C).

In der Kristallisationszone **5** stellt sich ein Kristallisationsgrad ein, der von der gewählten Granulattemperatur und von der vorhandenen Verweilzeit des Granulats abhängt. Das Volumen der Kristallisationszone ist so ausgelegt, dass es dem Granulatstrom eine Verweilzeit zwischen 1 und 5 h bietet. Im Kristallisator **5** ist es nicht notwendig, das der gewählten Temperatur entsprechende Kristallisationsgleichgewicht im Granulat einzustellen, das je nach Temperatur und optischer Reinheit des zur Polymerisation verwendeten Lactids zwischen einem Kristallisationsgrad von 30 und 70% liegt. Es genügt, einen Kristallisationsgrad einzustellen, der ein Verkleben des Granulats in der folgenden Entmonomerisierungszone verhindert. Dies ist bereits der Fall, wenn der Kristallisationsgrad mehr als 10%, vorzugsweise jedoch mehr als 20% beträgt.

Ein Rührer **6** mit vertikal angeordneter Welle, an der blattförmige Rührarme befestigt sind, streicht durch das Wanderbett im Kristallisator **5** mit einer Drehzahl, die zwischen 0,1/min und 5/min liegen kann. Die Drehzahl wird so gewählt, dass einerseits das Verkleben des Granulats während der Kristallisation verhindert wird, andererseits das aufzuwendende Drehmoment so gering bleibt, dass die Rührarme nicht beschädigt werden und kein nennenswerter Abrieb vom Granulat entsteht. Der Querschnitt der Rührerblätter ist für das Verfahren nur insofern von Bedeutung, als die Blätter einerseits eine ausreichende mechanische Stabilität haben müssen und andererseits möglichst wenig Widerstand bei ihrer Bewegung durch das Granulatbett erfahren sollen. Beispielsweise kann der Querschnitt im Prinzip rechteckig sein, wobei das Verhältnis der langen Seite zur kurzen Seite mehr als 20 beträgt, die kurze Seite in Laufrichtung des Blattes weist und die Kante in Laufrichtung abgeschrägt ist. Der Abstand zwischen der Schachtwand und dem von den Rührerblättern bestrichenen Kreis beträgt weniger als das 20-fache des mittleren Partikeldurchmessers. Der Kristallisator ist nach unten abgeschlossen durch einen Trichter aus Lochblech **5a.** Die Löcher haben einen Durchmesser von 1 mm, so dass von unten kommendes Gas, z.B. Luft durch den Trichter aus der Abtrennzone **7** kommend in die Kristallisationszone **5** eintreten kann (in Fig. 1 mit Bezugszeichen "7-5" dargestellt), jedoch kein Granulat nach unten hindurchtreten kann. Der Granulatstrom verlässt die Kristallisationszone **5** in Richtung Abtrennzone **7** durch einen in der Schachtachse an der Trichterspitze angeordneten Rohrstutzen (in Fig. 1 mit Bezugszeichen "5-7" dargestellt).

Die Einstellung der unterschiedlichen Temperaturen im Schachtapparat gemäß Ausführungsform a) gelingt durch die erfindungsgemäße Aufteilung des Inertgasstroms.

Der Abschluss der Kristallisationszone **5** nach unten durch den Lochblechtrichter **5a** erleichtert es, dem aus der Entmonomerisierungszone aufsteigenden Inertgas einen zweiten Inertgasstrom **11** niedrigerer Temperatur beizumischen. Durch gute Vermischung der beiden Gasströme in dem granulatfreien Volumen unterhalb des Lochblechtrichters **5a** wird die Temperatur des ersten Stroms so weit absenkt, dass im Kristallisator **5** eine niedrigere Granulattemperatur gefahren werden kann als in der Entmonomerisierungszone **7.** Die Granulattemperatur wird mit Hilfe der Temperatur (Gaserhitzer **11a)** und des Massenstroms (Gebläse **11b)** des Gasstroms **11** eingestellt.

Der in den unteren Abschnitt des Schachtapparats **8** gemäß **Fig. 1** zugeführte Inertgasmassenstrom sollte mindestens 2,0 mal so groß sein wie der Massenstrom des PLA-Granulats, bevorzugt mindestens 2,5 mal so groß und typischerweise 3,0 mal so groß. Der im oberen Abschnitt des Apparats **8** zugeführte Massenstrom des Inertgases wird nach Menge und Temperatur so bemessen, dass sich die im Kristallisator **5** gewünschte niedrigere Temperatur nach Mischen der beiden Inertgasströme einstellt. Bei einem Massenstromverhältnis Gas/Granulat von 3,0 im unteren Abschnitt und einer Gaseintrittstemperatur von 150°C ergibt sich z. B. für den im oberen Abschnitt zugeführten Gasmassenstrom ein Verhältnis von 0,5 bei einer Gastemperatur von 50°C. Damit stellt sich nach Mischen der beiden Gasströme vor dem Kristallisator **5** eine Temperatur von 120°C ein und damit auch im Granulat im Kristallisator **5.**

Im Kristallisator **5** wird eine Temperatur eingestellt, die mindestens 20°C unterhalb des kristallinen Schmelzpunkts des zu kristallisierenden PLAs liegt.

Der den Kristallisator **5** verlassende Granulatstrom gelangt in den unteren Abschnitt des Schachtapparats **8,** die Entmonomerisierungszone **7.** Dort wird die Temperatur des nunmehr teilkristallinen Granulats auf bis zu 5°C unterhalb des kristallinen Schmelzpunkts erhöht. Dies geschieht durch Einleiten eines auf die gewünschte Temperatur vorgeheizten Inertgasstroms **12** am unteren Ende der Entmonomerisierungszone, bevor das Granulat in den Granulatkühler **9** eintritt. Dabei muss die Wärmekapazität des Gases (das arithmetische Produkt aus dem Massenstrom des Gases und seiner spezifischen Wärmekapazität) größer sein als die Wärmekapazität des Granulats (das arithmetische Produkt aus dem Massenstrom des Granulats und seiner spezifischen Wärmekapazität). Vorzugsweise beträgt das Verhältnis der Wärmekapazität des Gases mindestens das 1,5-fache der Wärmekapazität des Granulats. Nur dann kann die gewünschte Granulattemperatur mit Hilfe der Temperatur des zugeführten Gases eingestellt werden.

Bei einer Verweilzeit des Granulats von 20 h in der Entmonomerisierungszone, vorzugsweise weniger, wird der Restmonomergehalt auf 0,2% oder darunter gesenkt.

Anschließend fließt das Granulat als Wanderbett in den Granulatkühler **9.** Dabei handelt es sich bevorzugt um einen Rohrbündelkühler. Granulat fließt durch die Rohre, während diese von außen mit Wasser gekühlt werden. Vorteilhaft ist es, anstelle von Wasser einen Gasstrom **9b** nach dem Gebläse **12b** zu verwenden und so Wärme aus dem Granulat zurückzugewinnen. Der Gaserhitzer **12a** muss dann nur die Wärmedifferenz zur Einstellung der genauen Temperatur vor Eintritt in die Entmonomerisierungszone **7** aufbringen.

Die Temperatur des Granulatstroms **10** am Austritt aus dem Kühler beträgt unter 60°C, vorzugsweise unter 50°C. Wenn diese Temperatur bei der alleinigen Verwendung des Gasstroms **12** nicht erreichbar ist, wird der obere Abschnitt des Granulatkühlers **9** für die Kühlung mit Gas, der unterste Abschnitt für Wasserkühlung ausgelegt. Das abgekühlte Granulat kann in ein Silo gefahren werden oder direkt in die Verpackung gehen.

Es versteht sich, dass der Inertgasstrom nicht nur auf seinem Weg durch die Entmonomerisierungszone **7** Monomer aufnimmt, sondern auch auf seinem Weg durch den Kristallisator **5,** auch wenn die dort aufgenommene Menge wegen der abgesenkten Temperatur und der kürzeren Verweilzeit gering ist. Das beladene Inertgas verlässt den Apparat oberhalb der Kristallisationszone als Abgasstrom **13.**

Das beladene Inertgas wird dem Wäscher **14** zugeführt. Dieser besteht aus einer Füllkörperkolonne mit vergrößertem Sumpfvolumen. Das Inertgas tritt oberhalb des Wasserspiegels im Sumpf und unterhalb der Füllkörperpackung **15** ein, strömt durch die Füllkörperpackung **15** nach oben und wird mit Wasser im Gegenstrom auf die Wassertemperatur gekühlt und gewaschen. Dabei gibt es das enthaltene Monomer vollständig an das Wasser ab. Überraschenderweise bleibt dabei auch kein Aerosol im Gasstrom zurück. Eine Pumpe **16** entnimmt das Wasser aus dem Sumpf, fördert es durch einen Kühler **17** und verteilt es über eine Verteilvorrichtung **18,** z. B. eine Sprühdüse, gleichmäßig über die Füllkörperschüttung. Die umgewälzte Waschwassermenge ist so bemessen, dass der Inertgasstrom vollständig diese Wassertemperatur annimmt. Der Kühler **17** stellt die Wassertemperatur ein. Sie kann zwischen 10°C und 50°C betragen, typischerweise 30°C. Die Temperatur ist für das Verfahren von untergeordneter Bedeutung und kann nach wirtschaftlichen Gesichtspunkten gewählt werden.

Der Sumpf des Wäschers ist so ausgelegt, dass Feststoffe aussedimentieren und sich im konischen Boden aufkonzentrieren können. Neben dem Monomer ist als Feststoff auch PLA-Staub vertreten, der zusammen mit dem Granulat in der Granulierung gebildet wird oder in den Rohrleitungen und Apparaten durch Abrieb vom Granulat entsteht und vom Abgasstrom mitgerissen wird. Vom Wäschersumpf wird die aufkonzentrierte Suspension mit einer geeigneten Pumpe **23** abgezogen, die feststoffhaltige Flüssigkeiten fördern kann. Dieser Schlamm wird einer Prozessstufe der Lactidherstellung zugeführt, in der das Transportwasser ohne Schaden für das darin enthaltene Produkt abgetrennt und das Monomer und der Staub verwertet werden können. Geeignet ist dazu z. B. die Milchsäureentwässerung, in der die ankommende, etwa 90%ige Milchsäure auf 100% aufkonzentriert wird (dies kann z.B. gemäß EP 2 030 667 B1, Spalte 9 "Aufkonzentrieren von Milchsäure" erfolgen). Diese Rückführung verwandelt die Feststoffe, die sonst als Abfall zu bewerten sind, zurück in PLA-Granulat.

Alternativ dazu können die im Waschwasser enthaltenen Feststoffe auch mit einem Filter **24** abgeschieden werden. In diesem Falle wird der Filterkuchen von Zeit zu Zeit entnommen, mit Wasser oder Milchsäure zu einer fließfähigen Suspension angerührt und in der Milchsäureentwässerung zugeführt.

Wasserverluste im Wäscherkreislauf, die durch die Entnahme entstehen, werden durch Zufuhr von demineralisiertem Wasser **22** ergänzt.

Das gereinigte Inertgas hat nach dem Wäscher einen Taupunkt, der der Temperatur des auf die Füllkörperschüttung aufgegebenen Waschwassers entspricht. Bevor das Inertgas in den Schachtapparat zurückgeführt werden kann wird es getrocknet. Das geschieht vorzugsweise in zwei Stufen: zunächst in einem Kühler **19** mit Kaltwasser auf z. B. 6°C, zur Entlastung des in der zweiten Stufe verwendeten Adsorptionslufttrockners **21,** der den benötigten Taupunkt von mindestens -20°C, vorzugsweise -40°C einstellt. Nach dem Kaltwasserkühler liegt die ausgetaute Feuchtigkeit z. T. als Nebel vor. Sie wird in dem Tropfen- und Nebelabscheider **20** abgeschieden und geht in den Wäscher zurück. Der Adsorptionslufttrockner wird mit erhitzter Luft regeneriert. Wird als Inertgas Luft verwendet, eignet sich z. B. ein kontinuierlich mit Adsorptionsrad arbeitender Trockner der Fa. Munters, Hamburg. Mit Stickstoff als Inertgas ist ein Festbettrockner z. B. der Fa. Silica Gel Verfahrenstechnik Berlin geeignet. Nach Einstellung des Taupunkts kann der Inertgasstrom auf die Zweige **11** und **12** aufgeteilt und so der Kreislauf geschlossen werden.

Verwendet man Stickstoff als Inertgas, ist die Kreislaufführung wegen der Kosten des Gases nötig. Bei der Verwendung von getrockneter Luft als Inertgas ist eine Kreislaufführung nicht unbedingt nötig. Die Luft könnte auch der Umgebung entnommen werden und nach Filtern und Trocknung für die Entmonomerisierung verwendet und nach Rückgewinnung des Lactis an die Umgebung abgegeben werden. Die Kreislaufführung hat jedoch den Vorteil, unabhängig von Wetterbedingungen und Luftverunreinigungen zu sein und die zur Ergänzung der Verluste mit der Abluft nötige Zufuhr an demineralisiertem Wasser zu vermeiden. Die Kreislaufführung trägt so zur Wasserersparnis und zur Prozesssicherheit bei. Die zur Trocknung der Luft und zur Abgaswäsche nötigen Ausrüstungen sind sowohl bei der Entnahme aus und der Abgabe an die Umgebungsluft als auch bei der Kreislaufführung notwendig, so dass Kreislaufführung keinen wirtschaftlichen Mehraufwand verursacht.

### Ablauf des Verfahrens nach Ausführungsform b)

In einer anderen Ausführungsform b) der Erfindung wird die Aufgabe gelöst durch Erwärmen bei gleichzeitiger Kristallisation des Granulats in einem eigenen Apparat mit horizontalem Rührer, und durch Vollendung der Entmonomerisierung in einem zweiten, daran angeschlossenen vertikalen Schachtapparat. Die maximalen Temperaturen im Kristallisator und in dem angeschlossenen Schachtapparat werden wie in Ausführungsform a) gewählt. Das mit Monomer beladene Inertgas wird durch Waschen mit Wasser wie in Ausführungsform a) gereinigt und im Kreislauf geführt.

Auch mit dieser Ausführungsform kann der Restmonomergehalt im Granulat von 0,2% in einer Verweilzeit des Granulats im Apparat von weniger als 20 Stunden erreicht werden. Diese Ausführungsform hat den Vorteil, einen geringeren Inertgasstrom zu benötigen als Ausführungsform a) und deshalb kleinere Apparate für die Reinigung, Trocknung und Rückführung des Gases.

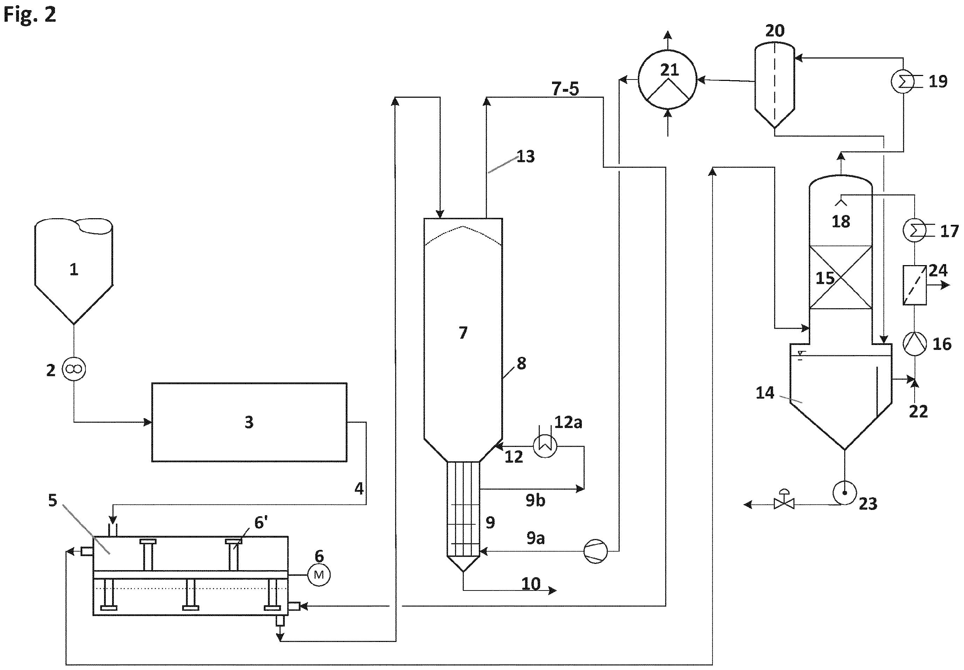

Der Ablauf des Verfahrens gemäß Ausführungsform b) ist in **Fig. 2** dargestellt. Gleiche Bezugszeichen bezeichnen dabei gleiche Bauteile und werden zum Teil nicht erneut gesondert beleuchtet.

Wie oben unter Ausführungsform a) beschrieben, wird PLA in einer kontinuierlichen Anlage aus Milchsäure hergestellt. Die monomerhaltige Schmelze, die zwischen 2% und 20% Lactid enthalten kann, wird aus dem Polymerisationsreaktor **1** abgezogen und einer Granuliervorrichtung **3** zugeführt. Als Granuliervorrichtung eignet sich auch in dieser Ausführungsform eine Unterwasser-Heißabschlag-Granulierung, eine Unterwasser-Stranggranulierung oder jede andere Granuliervorrichtung, die ein frei fließendes Granulat mit einer spezifischen Partikelmasse zwischen 5 und 100 mg erzeugen kann.

Das amorphe Granulat wird einem separaten Kristallisator **5** zugeführt. Als Kristallisator eignet sich ein sogenannter Pflugscharmischer mit einer horizontalen Rührerwelle **6,** an der Rührarme **6'** befestigt sind, die an ihrem Ende pflugscharähnliche Misch- und Förderelemente tragen. Diese Elemente verhindern das Kleben von Granulat an der Wand und sorgen für die Vereinzelung der während der Kristallisation entstehender Agglomerate, mischen und fördern das Granulatbett vom Einlass zum Auslass. Der Mantelraum des Kristallisators **5** ist als liegender Zylinder ausgebildet, in dessen Achse die Rührerwelle angeordnet ist. Der Apparat ist maximal bis zur Rührerwelle mit Granulat gefüllt. Er ist von außen mit einem Wärmeträgermedium (Dampf, Wasser, Öl) beheizbar, so dass das Granulat durch den Kontakt mit der beheizten Wand auf die Kristallisationstemperatur erwärmt werden kann. Durch den Behälter wird Inertgas geführt, vorzugsweise im Gegenstrom zur Hauptströmungsrichtung des Granulats. Der Inertgasstrom dient zur Abführung des während der Kristallisation aus dem Granulat frei werdenden Monomers. Als Inertgas wird dem Pflugscharmischer vorzugsweise das Abgas **13** der nachfolgenden Entmonomerisierungszone **7** im Schachtapparat **8** über eine Leitung 7-5 zugeführt. Das Abgas aus dem Pflugscharmischer wird mit einem Wäscher **14** gereinigt, getrocknet und im Kreislauf geführt, wie für Ausführungsform a) beschrieben. Die abgeschiedenen Feststoffe (Monomer und PLA-Staub) werden auf dieselbe Weise in den Prozess zurückgeführt wie dort beschrieben.

Anstelle eines Kristallisators **5** in Form eines Pflugscharmischers kann ein Drehtrommel-Apparat als Kristallisator **5** verwendet werden. Eine horizontal um ihre Achse rotierende Drehtrommel ist mit Einlass und Auslass für Granulat und Inertgas versehen. Granulat wird auf die Innenseite der Drehtrommel aufgegeben, die mit einem aufgeschweißten Spiralband das Granulat vom Einlass zum Auslass befördert. Die Rotation der Trommel hält das Granulat in beständiger Bewegung und verhindert dadurch die Bildung von Agglomeraten. Granulatdurchsatz und Verweilzeit werden über die Drehzahl und den Füllgrad der Trommel eingestellt. Der Granulatstrom kann auf seinem Weg durch die Trommel mit über die Trommellänge fest angeordneten Infrarot-Strahlern erhitzt werden. Die Granulattemperatur wird über die Heizleistung der Strahler gesteuert. Das während der Kristallisation aus dem Granulat freigesetzte Monomer wird mit dem Inertgasstrom abgeführt, der durch die rotierende Trommel vorzugsweise entgegen der Hauptstromrichtung des Granulats geführt wird.

Vorzugsweise wird auch dem Drehtrommel-Apparat das Abgas **13** des nachfolgenden Schachtapparates **8** zur Kristallisation zugeführt. Die Abgasreinigung und Feststoffrückführung erfolgt wie für Ausführungsform a) beschrieben.

Das vorkristallisierte Granulat aus dem Kristallisator **5** wird einem Schachtapparat **8** zugeführt, der in dieser Ausführungsform keine Kristallisationszone und keinen Rührer enthält. In der Entmonomerisierungszone **7** wird die Temperatur des nunmehr teilkristallinen Granulats auf bis zu 5°C unterhalb des kristallinen Schmelzpunkts erhöht. Dies geschieht durch Einleiten eines auf die gewünschte Temperatur vorgeheizten Inertgasstroms **12** am unteren Ende der Entmonomerisierungszone, bevor diese in den Granulatkühler **9** übergeht. Dabei muss die Wärmekapazität des Gases (das arithmetische Produkt aus dem Massenstrom des Gases und seiner spezifischen Wärmekapazität) größer sein als die Wärmekapazität des Granulats sein (das arithmetische Produkt aus dem Massenstrom des Granulats und seiner spezifischen Wärmekapazität). Der in den unteren Abschnitt des Schachtapparats gemäß Fig. 2 zugeführte Inertgasmassenstrom muss demnach mindestens 2,0 mal so groß sein wie der Massenstrom des PLA-Granulats, bevorzugt mindestens 2,5 mal so groß und typischerweise 3,0 mal so groß. Nur dann kann die gewünschte Granulattemperatur mit Hilfe der Temperatur des zugeführten Gases eingestellt werden.

Bei einer Verweilzeit des Granulats von 20 h in der Entmonomerisierungszone, vorzugsweise weniger, wird der Restmonomergehalt auf 0,2% oder darunter gesenkt.

Anschließend fließt das Granulat als Wanderbett in den Granulatkühler 9, der bereits bei der Ausführungsform a) beschrieben wurde.

### Ablauf des Verfahrens nach Ausführungsform c)

Eine weitere Ausführungsform c) besteht in einer zweistufigen Entmonomerisierung: Sie kombiniert Abtrennung des Lactids aus der polymerisierten Schmelze durch Vakuumverdampfung in der 1. Stufe und - nach Granulierung der Schmelze - aus dem festen PLA-Granulat in der zweiten Stufe. Diese Ausführungsform eignet sich bei einem hohen Monomergehalt in der Schmelze nach der Polymerisation. Wenn diese Anforderung nicht besteht, führt sie zu besonders kurzen Verweilzeiten in Stufe 2 von < 10 h. Da in der ersten Stufe keine hohen Ansprüche an die Restlactidkonzentration des Produkts gestellt werden (der Endwert wird erst in der zweiten Stufe eingestellt) kann ein kostengünstiger Apparat ohne bewegliche Teile verwendet werden, z. B. ein Fallstrangapparat. In der zweiten Stufe wird ein Schachtapparat mit Kristallisationsstufe gemäß Ausführungsform a) oder mit separatem vorgeschaltetem Kristallisator wie in Ausführungsform b) verwendet. Die Rückgewinnung des Lactids geschieht in der ersten Stufe durch Kondensation in flüssiger Form bei einem Druck oberhalb des Tripelpunkts des Lactids. In der zweiten Stufe wird das lactidhaltige Inertgas wie in Ausführungsform a) mit Wasser gewaschen und im Kreislauf geführt. Das abgeschiedene Monomer wird zurückgeführt wie dort beschrieben.

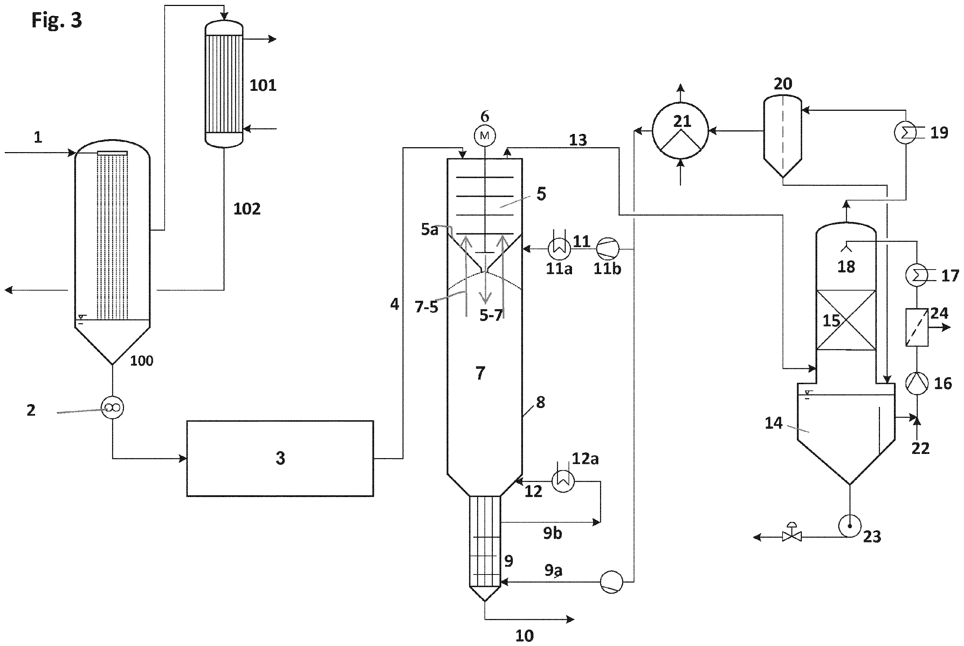

Der Ablauf des Verfahrens gemäß Ausführungsform c) ist in **Fig. 3** dargestellt. Auch hier betreffen gleiche Bezugszeichen gleiche Bestandteile und werden zum Teil nicht erneut gesondert beschrieben. Diese Ausführungsform wird bevorzugt, wenn die Schmelze nach der Polymerisation mehr als 5% Monomer enthält oder wenn besonders kurze Verweilzeiten bei der Entmonomerisierung in der festen Phase erwünscht sind.

Wie oben unter Ausführungsform a) beschrieben, wird PLA in einer kontinuierlichen Anlage aus Milchsäure hergestellt. Die monomerhaltige Schmelze **1,** die zwischen 2% und 20% Lactid enthalten kann, wird aus dem Polymerisationsreaktor abgezogen und einem Fallstrangentgaser **100** zugeführt. Dort wird die Schmelze mit Hilfe einer am oberen Ende angeordneten Düsenplatte auf eine Vielzahl von vertikalen Bohrungen und somit in Stränge aufgeteilt, die unter Einwirkung der Schwerkraft über eine durch die Behälterabmessungen vorgegebene Strecke nach unten fallen. Im Behälter wird ein Vakuum eingestellt, das oberhalb des Tripelpunkts des Lactids liegt, z. B. bei 10 mbar. Das in der Schmelze enthaltene Monomer verdampft aus den Strängen und wird in einen Kondensator **101** geleitet, wo es in flüssiger Form an gekühlten Oberflächen kondensiert. Dort ist eine Temperatur oberhalb des Lactid-Schmelzpunkts einzuhalten, z. B. also 110°C. Das Monomer wird im Kondensator gesammelt und geht zurück in die vorgelagerten Anlagenteile, z. B. in die Lactidvorlage der Ringöffnungspolymerisation oder in die Lactidreinigung (Bezugszeichen **102**).

Die Schmelzestränge im Fallstrangentgaser tauchen in das Schmelzereservoir am Behälterboden ein. Pumpe **2** hält einen vorgegebenen Füllstand und fördert die Schmelze in die Granuliervorrichtung **3.** Als Granuliervorrichtung eignet sich auch in dieser Ausführungsform eine Unterwasser-Heißabschlag-Granulierung, eine Unterwasser-Stranggranulierung oder jede andere Granuliervorrichtung, die ein frei fließendes Granulat mit einer spezifischen Partikelmasse zwischen 5 und 100 mg erzeugen kann.

Das amorphe Granulat geht in die Kristallisationszone **5** des Schachtapparats **8,** die mit einem vertikalen Rührer **6** zur Vermeidung von Agglomeraten ausgerüstet ist. Dieser Apparat entspricht genau der Beschreibung wie in der Ausführungsform a). Insbesondere werden hier dieselben Granulattemperaturen und Inertgasmengen eingehalten wie dort. Nach Durchlaufen der Kristallisationszone **5,** der Entmonomerisierungszone **7** und des Granulatkühlers **9** enthält das Granulat weniger als 0,2% Lactid und wird der Lagerung oder der Verpackung zugeführt.

Das mit Monomer beladene Abgas **13** wird gewaschen, getrocknet und dem Schachtapparat wieder zugeführt, wie für Ausführungsform a) näher beschrieben. Das im Wäscher abgeschiedene Monomer wird in den Prozess zurückgeführt, wie ebenfalls dort beschrieben.

Alternativ kann das Granulat aus der Granulierung einem separaten Kristallisator **5** zugeführt werden, der als Pflugscharmischer oder als Drehtrommelapparat ausgelegt ist, die beide unter der Ausführungsform b) näher beschrieben sind. Insbesondere gelten die dort genannten Temperaturen auch für diese Ausführungsform c). Nach der Kristallisation wird das Granulat einem Schachtapparat **8** zugeführt, der in diesem Fall ohne Kristallisationszone **5** ausgeführt ist (siehe Ausführungsform b). Nach Durchlaufen der Entmonomerisierungszone **7** und des Granulatkühlers enthält das Granulat weniger als 0,2% Lactid und wird der Lagerung oder der Verpackung zugeführt.

Das Abgas aus dem Schachtapparat wird vorzugsweise durch den separaten Kristallisator geführt, gewaschen, getrocknet und wieder dem Schachtapparat zugeführt, wie für Ausführungsform b) beschrieben. Das im Wäscher abgeschiedene Monomer wird in den Prozess zurückgeführt, wie für Ausführungsform a) beschrieben.

Bei sämtlichen der zuvor genannten Ausführungsformen des erfindungsgemäßen Verfahrens kann anstelle von Wasser als Waschflüssigkeit Milchsäure in jedem Mischungsverhältnis mit Wasser verwendet werden. Besonders wirtschaftlich ist es, die zur Herstellung des Lactids verwendete Milchsäure zu verwenden, die einen Wassergehalt von 5 bis 15% hat. Das aus dem Inertgas abgeschiedene Monomer verbleibt in der Milchsäure, die anschließend polykondensiert und zu Lactid depolymerisiert wird. Auf diese Weise wird das Monomer ohne weitere Maßnahme zurückgeführt in den Polymerisationsprozess.

Für sämtliche der zuvor genannten Ausführungsformen gilt ebenso, dass alternativ zum Abkühlen und Auswaschen des abgetrennten Lactids mit Wasser oder Milchsäure das Lactid auch durch Abkühlen des Inertgasstroms und Abscheiden mit üblichen Vorrichtungen zur Trockenentstaubung aus dem beladenen Inertgasstrom abgetrennt werden kann. Das Abkühlen erfolgt z. B. durch Zumischen eines kalten Inertgasstroms zu dem mit Monomer beladenen Inertgasstrom. Dabei desublimiert Lactid in Staubform und kann sich nicht ablagern. Als Vorrichtungen zum Abscheiden des Lactidstaubs eignen sich Zyklone und textile Filter mit kontinuierlicher Abreinigung durch Abrütteln oder Druckstöße. Das Lactid wird hier als rieselfähiger Staub abgeschieden und nach Aufschmelzen in den Polymerisationsprozess zurückgeführt. Desublimiertes Lactid neigt zur Bildung eines Aerosols, kann also mit den genannten Vorrichtungen nicht zu 100% abgeschieden werden. Staubförmiges Lactid wirkt auf Gebläse noch in geringen Konzentrationen abrasiv und führt in kurzer Zeit zur Zerstörung. Die Kreislaufführung des Inertgasstroms ist so nicht möglich. Um dennoch eine vollständige Reinigung des Inertgasstroms zu ermöglichen, wird das Gas mit Wasser gewaschen. Überraschend wurde gefunden, dass die Wäsche mit Wasser in einem erfindungsgemäßen Gaswäscher auch Aerosolpartikel zurückhält und eine vollständige Reinigung des Inertgases und damit Kreislaufführung erreicht werden kann. Die im Wasser abgeschiedene Lactidmenge ist gering (< 0,1% bezogen auf das PLA), so dass eine Rückführung in den PLA-Prozess nicht zwingend notwendig ist.

Alle Ausführungsformen der Erfindung ermöglichen einen vollständig kontinuierlichen Betrieb, indem sie ohne die Abscheidung des abgetrennten Restmonomers in fester Form in Desublimatoren auskommt. Vermieden wird der damit verbundene diskontinuierliche Betrieb, bestehend aus einem Zyklus aus Evakuieren, Abscheidung in fester Form auf gekühlten Flächen, Druckerhöhung, Abschmelzen des Lactids von diesen Flächen und Abziehen des flüssigen Lactids aus den Desublimatoren, erneutes evakuieren etc.

Die Erfindung ist auch anwendbar auf PLA-Granulat aus einer sogenannten "Latentwärmekristallisation". In speziell darauf ausgelegten Granuliersystemen wird die in Stränge oder Tropfen zerteilte Schmelze mit Wasser nur bis zur Ausbildung einer festen Haut abgeschreckt und geschnitten, während das Innere des Strangs oder Tropfens noch flüssig ist. Dort kristallisiert das PLA aus der eingeschlossenen Schmelze bei Temperaturen unterhalb des kristallinen Schmelzpunkts des PLAs. Während dieses Vorgangs wird das Granulat vom Wasser getrennt und anschließend für eine gewisse Zeit mechanisch in Bewegung gehalten, bis die Partikel unter äußerem Druck ihre Form nicht mehr verändern. Das kristalline Granulat fällt mit einer Temperatur an, die zwischen 5 und 50°C unterhalb des Schmelzpunkts des kristallinen PLAs liegt. Anschließend wird das Granulat direkt in einen Schachtapparat ohne Kristallisationszone überführt und bei Temperaturen bis 5 °C unterhalb des kristallinen Schmelzpunkts des Granulats entmonomerisiert. Diese Verfahrensvariante eignet sich vorzugsweise für schnell kristallisierendes Granulat mit einem D-Gehalt von weniger als etwa 2%. Bei PLA-Typen mit reduzierter Kristallisationsgeschwindigkeit, d. h. mit einem D-Gehalt zwischen etwa 2% und 6% kann es vorteilhaft sein, das Granulat zunächst in eine Kristallisationszone gemäß Ausführungsform a) oder b) zu überführen, in der es bis zum Abschluss der Kristallisation verweilt.

Bei dieser Verfahrensvariante entfällt ein Abkühlen des Granulats auf Temperaturen unter den Glasübergang und ein Wiederaufheizen zur Kristallisation des amorphen Granulats.

Die Erfindung ist anwendbar auf PLA mit einem kristallinen Schmelzpunkt von mehr als 130°C. PLA ist aufgebaut aus L-Milchsäureeinheiten ohne oder mit Beimischungen von D-Milchsäureeinheiten oder aus D-Milchsäureeinheiten ohne oder mit Beimischungen von L-Milchsäureeinheiten. Während PLA aus den reinen L- oder D-Milchsäureeinheiten einen Schmelzpunkt von ca. 180°C hat, nimmt der Schmelzpunkt mit zunehmender Beimischung des entgegengesetzten optischen Enantiomeren ab. Ab einem Gehalt von etwa 6 % D-Milchsäureeinheiten in PLA aus L-Milchsäureeinheiten bzw. von etwa 6 % L-Milchsäureeinheiten in PLA aus D-Milchsäureeinheiten wird kein kristalliner Schmelzpunkt mehr beobachtet. Diese PLA-Typen erweichen bei Überschreiten der Glasübergangstemperatur (um 55 °C) ohne zu kristallisieren und bilden eine Schmelze. Die erfindungsgemäße Entmonomerisierung ist jedoch nur bei Temperaturen von mindestens 130°C möglich, weil nur dort technisch brauchbare Prozesszeiten erreicht werden (siehe Tab. 1 unten). Die Erfindung setzt zudem voraus, dass das PLA ein festes, frei fließendes Granulat bildet. Die Erfindung ist also nicht anwendbar auf PLA mit einem Schmelzpunkt unterhalb von 130°C und auf PLA, das keinen kristallinen Schmelzpunkt hat.

Versuche im Labormaßstab (Beispiel 1) haben gezeigt, dass der Erfolg der Entmonomerisierung, gemessen an der benötigten Verweilzeit und am erreichten Restmonomergehalt, umso größer ist, je höher die Temperatur im Granulat ist. Es ist deshalb erwünscht, eine möglichst hohe Temperatur zu verwenden. Diese Temperatur ist jedoch begrenzt durch den Schmelzpunkt des Granulats, oberhalb dessen nicht mehr von einem Granulat gesprochen werden kann. Je nach dem in der vorausgehenden Kristallisation erreichten kristallinen Zustand, der durch Kristallisationsgrad und Kristallitgröße gekennzeichnet ist, spätestens jedoch etwa 5°C unterhalb des Schmelzpunkts erweicht das Granulat und bildet Agglomerate. Es hat sich gezeigt, dass ein kontinuierlich betriebener Schachtapparat besonders empfindlich gegen Agglomerate ist, weil sie den Granulatfluss unterbrechen. Zugleich kommt der Entmonomerisierungsprozess zum Erliegen, da das Inertgas die Agglomerate nicht mehr durchströmen und das Monomer nicht mehr abführen kann.
Für die Kristallisation des amorphen Granulats gilt eine noch niedrigere Temperaturgrenze. Amorphes PLA-Granulat erweicht beim Erwärmen über die Glasübergangstemperatur (60°C), spätestens bei 80-90°C. Zugleich setzt die Kristallisation ein, die den Schmelzpunkt des Polymers ausgehend vom Glasübergangspunkt bei 60°C ansteigen lässt. Hat das PLA eine ausreichende Kristallisationsgeschwindigkeit, verhindert die fortschreitende Kristallisation ein zu starkes Erweichen oder gar Aufschmelzen der Partikel beim Erwärmen des Granulats. So entstehen nur lose Agglomerate, die mechanische Bewegung wieder vereinzeln kann. Verläuft die Kristallisation zu langsam, überholt der Aufheizvorgang den Kristallisationsprozess, das Granulat verweilt zu lange in einem klebrigen bis geschmolzenen Zustand. Dabei tritt starke Agglomeration bis zum Zusammenschmelzen der Körner ein. Als Ursache der Granulatverklebungen wurde somit eine im Verhältnis zur Aufheizgeschwindigkeit zu geringe Kristallisationsgeschwindigkeit des PLAs identifiziert.

Das Maximum der Kristallisationsgeschwindigkeit von PLA liegt je nach optischer Reinheit des zur Polymerisation verwendeten Lactids bei etwa 110 bis 130°C. Bei höherer Temperatur nimmt die Kristallisationsgeschwindigkeit wieder ab. Es wurde gefunden, dass eine Temperatur von 20°C unterhalb des kristallinen Schmelzpunkts des Granulats nicht überschritten werden darf, wenn Agglomeration während der Kristallisation verhindert werden soll. Dabei ist zu beachten, dass der Schmelzpunkt des Granulats mit zunehmendem D-Gehalt bei PLLA bzw. mit zunehmendem L-Gehalt bei PDLA abnimmt. Die Temperaturgrenze sinkt also mit zunehmendem Gehalt des jeweils kleineren Enantiomerenanteils.

Obwohl in einem Schachtapparat gleiche Temperaturen in Kristallisation und Entmonomerisierung eine einfache Auslegung und Fahrweise erlauben, sind so keine Temperaturen in der Nähe des kristallinen Schmelzpunkts des PLA möglich und deshalb auch keine optimale Verweilzeit oder kein optimaler Restmonomergehalt. Als Lösung des Problems sind unterschiedliche Temperaturen in der Kristallisationszone (Temperatur der maximalen Kristallisationsgeschwindigkeit) und der Entmonomerisierungszone (Temperatur der maximal möglichen Entmomomerisierungsgeschwindigkeit) einzustellen. Die obere Temperaturgrenze für die Kristallisation liegt also ca. 15°C unter der oberen Temperaturgrenze für die Entmonomerisierung.

Eine exzessive Temperaturerhöhung im Granulat durch die bei der Kristallisation freiwerdende Wärme, wie sie in EP 755 956 B1 als Ursache der Agglomeratbildung genannt wird, wird durch den Gegenstrom Granulat/Inertgas in der Kristallisationszone verhindert. Typischerweise kommt es ohne Inertgasstrom zu einem Temperaturanstieg von 18 °C im Granulat. Bei den oben genannten typischen Massenstromverhältnissen von Gas zu Granulat in der Kristallisationszone nimmt das Gas die Kristallisationswärme aus dem Granulat auf und führt sie ab. Der Gegenstrom Gas/Granulat in Verbindung mit dem Massenstromverhältnis und dem hohen Wärmeübergangskoeffizienten zwischen Gas und Granulat lässt keine Temperaturerhöhung im Granulat zu. Dort stellt sich die vorgegebene Temperatur des Gasstroms ein. Die Agglomeratbildung ist deshalb sehr viel leichter zu beherrschen als ohne Inertgasgegenstrom.

Die vorliegende Erfindung wird anhand der nachfolgenden Beispiele näher erläutert, ohne die Erfindung jedoch auf die dargestellten speziellen Parameter zu beschränken.

Für die Zwecke der vorliegenden Erfindung werden die nachfolgenden Definitionen verwendet.
- Alle Prozentangaben sind Massenprozente.
- PLLA, PDLA: Polymilchsäure bzw. Polylactid (PLA) aus überwiegend L-bzw. D-Lactid mit einem Anteil von max. 6% D- bzw. L-Milchsäureeinheiten.
- Milchsäureeinheit: Baustein der PLA-Molekülkette aus veresterter D- oder L-Milchsäure
- Monomer: Darunter ist hauptsächlich Lactid zu verstehen. In der aus dem Polymer oder aus dem Inertgas abgetrennten Form enthält das Monomer neben Lactid noch Begleitstoffe, wie das lineare Dimer und Abbauprodukte des PLA in geringer Konzentration.
- Tripelpunkt: Punkt im Druck-Temperatur-Diagramm eines Reinstoffes, in dem alle drei Phasen, feste, flüssige und dampfförmige, koexistieren. Im Tripelpunkt treffen sich die Phasengrenzlinien fest/flüssig, flüssig/dampfförmig und fest/dampfförmig.
   Für reines L-Lactid liegt dieser Punkt bei 96,9°C und 1,4 mbar. Im Rahmen dieser Erfindung ist dieser Wert nicht als absolut zu sehen, er hängt ab von der Zusammensetzung des Lactids in dem vorgestellten Verfahren. Sowohl der Gehalt des Lactids an den optischen Isomeren L-Lactid, meso-Lactid und D-Lactid wirkt sich auf den Tripelpunkt aus, als auch Nebenprodukte der PLA-Polymerisation, die in der Entmonomerisierung zusammen mit dem Lactid verdampfen oder sublimieren. Hier sind Milchsäure und andere zyklische oder lineare Oligomere des PLA zu nennen sowie Abbauprodukte der PLA-Polymerisation.
- Desublimieren: Direkter Übergang eines Stoffes vom dampfförmigen Zustand in den festen Zustand bei Drücken und Temperaturen unterhalb des Tripelpunkts, d. h. ohne dazwischen den flüssigen Zustand zu durchlaufen. Die Umkehrung von Sublimieren.
- Lactidabscheider, Lactidabscheidung: Im Folgenden ist darunter ein verfahrenstechnischer Apparat oder eine verfahrenstechnische Operation zu verstehen, in dem bzw. der dampfförmiges Lactid entweder aus einem Trägergas oder im Vakuum in fester oder flüssiger Form abgeschieden wird.
- Entmonomerisierung: Abtrennung bzw. Apparat zur Abtrennung von Monomer aus einem Polymer durch Überführen des Monomers in die Gasphase und Trennung der monomerhaltigen Gasphase vom Polymer. Neben dem Monomer sind stets weitere flüchtige Komponenten im Polymer enthalten, wie Milchsäure, zyklische und lineare Oligomere sowie Produkte des thermischen Polymerabbaus, die zusammen mit dem Monomer abgetrennt werden. Wegen ihrer im Vergleich zum Monomer niedrigen Konzentration werden sie im Text nicht weiter genannt und sind im Begriff "Monomer" stets mit enthalten.
- Fallstrangentgaser: Kontinuierlicher Entgaser, in dem der Polymerschmelzestrom durch eine Vielzahl von Düsenbohrungen in Stränge (oder auch Fäden) aufgeteilt wird, die im senkrechten Fall den Innenraum eines evakuierten Behälters durchlaufen. In der Fallzeit zwischen Austritt der Schmelze aus der Bohrung und Auftreffen auf dem Behälterboden verdampft enthaltenes Monomer. Die Schmelze wird vom Behälterboden kontinuierlich abgezogen und ausgetragen.
- Kristalliner Schmelzpunkt, kristalline Schmelztemperatur: Thermoplastische Polymere wie PLA können unterhalb ihres Schmelzpunkts teilkristallin oder amorph vorliegen. Teilkristallines PLA geht erst am "kristallinen Schmelzpunkt" in eine Schmelze über, d. h. wenn die kristallinen Bereiche im Polymer aufschmelzen. Dieser Schmelzpunkt hängt ab von der optischen Reinheit des Polymers, d. h. z. B. bei PLLA vom Gehalt an D-Milchsäureeinheiten. Er kann zwischen 130°C (hoher D-Gehalt) und 180°C (geringer D-Gehalt)betragen. PLLA mit einem D-Gehalt unter ca. 6% liegt nach der Granulierung der Schmelze durch Abschrecken mit Wasser meist in amorpher Form vor, kann jedoch beim Erwärmen über die Glasübergangstemperatur hinaus "kristallisieren", d. h. in den teilkristallinen Zustand übergehen. Dabei erweicht das amorphe Polymer zunächst am Glasübergangspunkt. Beim weiteren Erwärmen setzt bei 80-90°C die Kristallisation ein und das Polymer wird mit der sich ausbreitenden teilkristallinen Struktur wieder fest, bis es am kristallinen Schmelzpunkt in eine Schmelze übergeht.
   PLLA mit einem D-Gehalt über ca. 6% kann unter technischen Bedingungen nicht kristallisieren und liegt oberhalb der Glasübergangstemperatur (ca. 60°C) als Schmelze vor.
- Feste Phase: Teilkristallines PLA unterhalb des kristallinen Schmelzpunkts oder amorphes PLA unterhalb der Glasübergangstemperatur.
   Zur Bestimmung physikalischer Parameter werden die folgenden analytischen Methoden verwendet.
- Schmelzpunkt: Eine Probe des zu untersuchenden PLAs wird in einem den Wärmefluss aufzeichnenden Differentialkalorimeter (DSC) mit einer Geschwindigkeit von 10°C/min im Stickstoffstrom von Umgebungstemperatur bis auf eine Endtemperatur von 200°C aufgeheizt. Als Schmelzpunkt wird das Maximum des dabei aufgezeichneten endothermen Schmelzpeaks ausgewertet. Bei teilkristallinen Proben wird der Schmelzpunkt beim ersten Aufheizen genommen.
   Amorphe Proben zeigen beim 1. Aufheizen häufig keinen Schmelzpunkt und werden nach Abkühlen der Probe von 200°C mit 10°C/min auf 40°C einem zweiten Aufheizvorgang mit gleicher Geschwindigkeit unterzogen. Gewöhnlich tritt dabei ein Schmelzpeak auf, dessen Maximum als Schmelzpunkt angegeben wird.
- Spezifische Schmelzwärme: Die spezifische Schmelzwärme einer teilkristallinen Probe wird aus der Fläche unter dem Schmelzpeak und der eingewogenen Probemenge berechnet. Division durch die spezifische Schmelzwärme eines vollständig kristallinen PLAs (91 J/g) ergibt den Kristallinitätsgrad.
- Restlactidgehalt im PLA:
   Die PLA-Probe wird in Chloroform gelöst und mit Isopropanol gefällt. Das gefällte PLA wird abfiltriert, dabei verbleiben die niedermolekularen Bestandteile in der Lösung. Nach Zugabe von Pentamethylbenzol als internem Standard wird die Lösung im Gaschromatographen auf einer Kapillarsäule DB-5; 15/0,32 in ihre Bestandteile getrennt und Lactid mit einem Flammenionisationsdetektor quantitativ detektiert.
- Nl, Normliter:
   Volumen, bezogen auf den physikalischen Normzustand nach DIN 1343.

### Beispiel 1: Entmonomerisierung im Labormaßstab

Es wurden Laborversuche zur Entmonomerisierung von PLA-Granulat in einem Inertgasstrom durchgeführt. Die Apparatur bestand aus Gaswaschflaschen mit eingelassener Fritte, die in einen mit temperiertem Öl beheizten Ofen eingesetzt waren. Das Granulat lag als Festbett mit etwa 30 mm Höhe auf der Fritte, die von unten mit vorgeheiztem Inertgas durchströmt wurde. Ein Thermometer zur Messung der Granulattemperatur wurde durch den Deckel der Gaswaschflasche geführt und mit seinem unteren Ende in der Mitte des Granulatbettes platziert. Der Inertgasstrom wurde mit einem Durchflussmesser auf 2 Nl/g/h eingestellt, eine Menge, die ausschließt, dass die Geschwindigkeit der Entmonomerisierung durch die Gasmenge begrenzt wird. Der die Apparatur verlassende Inertgasstrom wurde über einen Flüssigkeitsverschluss an die Umgebung abgeführt. Dadurch wird verhindert, dass feuchte Luft aus der Umgebung in die Apparatur eindringt und das Granulat beeinflusst.

Als Inertgas wurde sowohl synthetische Luft als auch Stickstoff, beide in der Reinheit 5.0, verwendet. Ein Feuchteeinfluss kann deshalb ausgeschlossen werden.

Die mit Granulat befüllte Gaswaschflasche wird in die vorgeheizte Apparatur eingesetzt und der Inertgasstrom in Gang gesetzt. Die Aufheizzeit des Granulats auf die beabsichtigte Temperatur war 45 Minuten. Der Versuchsbeginn wurde deshalb mit 45 Minuten nach dem Einsetzen der Flaschen in den Ofen definiert. Der dadurch verursachte Fehler ist vernachlässigbar. Es wurde amorphes Granulat verwendet, um zu vermeiden, dass eine vorherige Kristallisation bereits Monomer aus dem Granulat freisetzt und so das Messergebnis verfälscht. Es kam beim Aufheizen deshalb zur Agglomeration, die durch Schütteln der Flasche nach dem Aufheizvorgang rückgängig gemacht wurde. Die Gaswaschflaschen wurden nach vorgegebener Zeit aus der Apparatur entnommen und das Granulat nach Abkühlen auf Umgebungstemperatur auf den verbliebenen Gehalt an Lactid analysiert. **Tabelle 1** enthält die Ergebnisse.

**Tabelle 1: Entmonomerisierung im Labormaßstab**

| | | | | |
|---|---|---|---|---|
| **Versuchs-Nr.** | **1** | **2** | **3** | **4** |
| **Inertgas Granulattemperatur (°C)** | **Stickstoff** | **Stickstoff** | **Stickstoff** | **Luft** |
| | **130** | **140** | **150** | **150** |

| **Lactidgehalt/Schmelzpunkt (%)/(°C):** | | | | |
|---|---|---|---|---|
| **Zu Versuchsbeginn** | **0,37/160** | **0,37/160** | **0,37/ 160** | **0,37/** 160 |
| **Nach 3 h** | **0,29/159** | **0,26/158** | **0,22/163** | **0,25/164** |
| **Nach 6 h** | **0,27/159** | **0,25/161** | **0,15/164** | **0,22/165** |
| **Nach 24 h** | **0,17/162** | **0,14/162** | **0,10/171** | **0,10/170** |
| **Versuchs-Nr.** | **5** | **6** | | |
| **Inertgas Granulattemperatur (°C)** | **Luft** | **Stickstoff** | | |
| | **150** | **150** | | |

| **Lactidgehalt/Schmelzpunkt (%)/(°C):** | | | | |
|---|---|---|---|---|
| **Zu Versuchsbeginn** | **3,5/160** | **3,5/160** | | |
| **Nach 2 h** | **1,86/161** | **1,74/162** | | |
| **Nach 4 h** | **1,06/164** | **0,86/163** | | |
| **Nach 6 h** | **0,57/165** | **0,56/164** | | |
| **Nach 24 h** | **0,12/170** | **0,11/171** | | |

Es zeigt sich, dass die Geschwindigkeit der Entmonomerisierung mit der Granulattemperatur ansteigt. Für einen optimalen Prozess ist also ein Arbeiten möglichst dicht am Schmelzpunkt des Granulats erwünscht. Stickstoff oder trockene Luft eignen sich gleichermaßen als Inertgas.

Bei konstanter Temperatur nimmt der Schmelzpunkt des Granulats während der Entmonomerisierung zu. Es ist demnach kein Schmelzen oder Erweichen im zeitlichen Verlauf der Entmonomerisierung zu befürchten. Ein höheres Temperaturniveau bei der Entmonomerisierung führt auch zu einem höheren Schmelzpunkt. Deshalb ist Schmelzen oder Erweichen auch infolge eines Temperaturanstiegs während der Entmonomerisierung nicht zu befürchten, solange der vor der Behandlung gemessene Schmelzpunkt nicht überschritten wird.

### Beispiel 2: Entmonomerisierung gemäß Ausführungsform c)

Das Beispiel zeigt die Entmonomerisierung von PLA-Granulat mit einer Vorentmonomerisierung in einem Fallstrangapparat mit anschließender Entmonomerisierung in einem vertikalen Schachtapparat gemäß Ausführungsform c), Fig. 3. Die Ergebnisse sind in der **Tabelle 2** unter den Versuchsnummern 1 bis 5 enthalten.

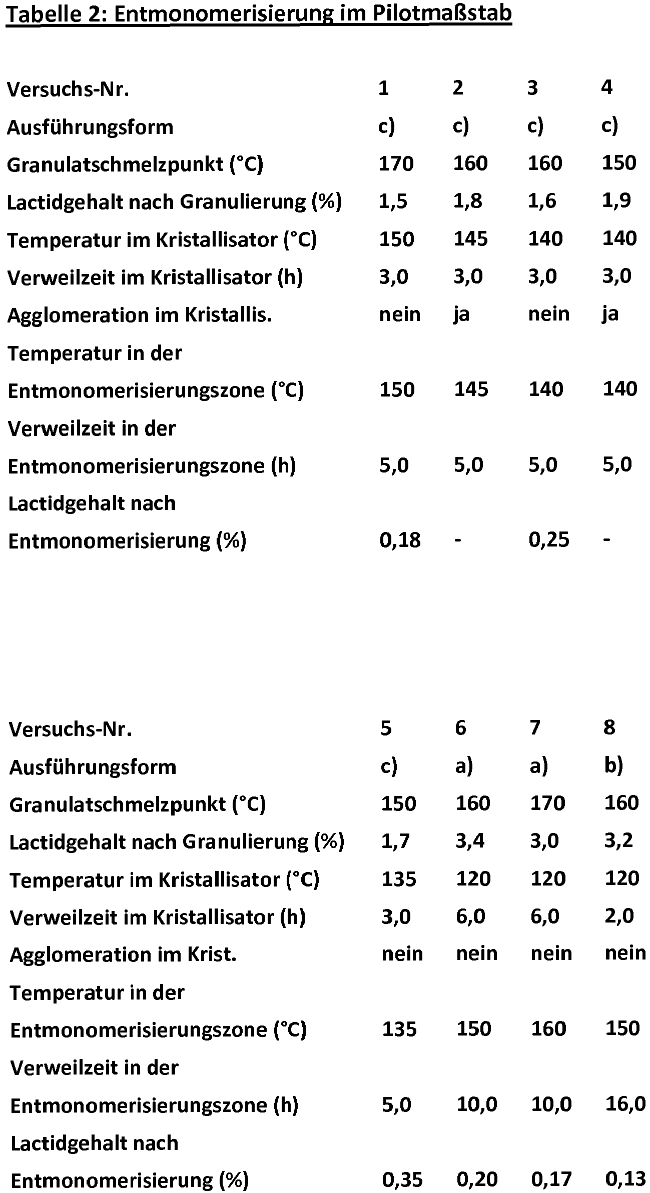

In einer kontinuierlichen Pilotanlage wurde PLA durch ringöffnende Polymerisation von Lactid hergestellt und im Schachtapparat nach Fig. 3 entmonomerisiert. Monomerhaltige Schmelze wurde mit Hilfe einer Zahnradpumpe aus dem zur Vorentmonomerisierung dienenden Fallstrangapparat in einem Mengenstrom von 40 kg/h abgezogen und einer Unterwasser-Heißabschlag-Granulierung zugeführt. Die Granulierung erzeugte annähernd kugelförmiges PLA-Granulat mit einem mittleren Durchmesser von 2,5 mm. Das Granulat lag im amorphen Zustand vor, erkennbar an der Transparenz der Partikel.

Bei einem Durchsatz von 40 kg/h bietet der Schachtapparat eine Verweilzeit von 3 h in der Kristallisationszone und von 5 h in der Entmonomerisierungszone. Als Inertgas wurde getrocknete Luft mit einem Taupunkt von - 40°C verwendet. Der Rührer lief mit einer Drehzahl von 2/Minute. Die Granulattemperatur wurde in den beiden Zonen gleich eingestellt. Der Lactidgehalt lag nach der Granulierung zwischen 1,5 und 2 %. Die Versuchseinstellungen Nr. 1 und 3 zeigen, dass die Kristallisation bei einer Differenz zwischen PLA-Schmelzpunkt und Granulatemperatur von 20°C noch ohne Agglomeration gefahren werden kann. Der Rührer konnte die gebildeten Agglomerate in kurzer Zeit zuverlässig auflösen. Bei einer Temperaturdifferenz von 15°C (Vers.-Nr. 2) und besonders bei einer Temperaturdifferenz von 10°C (Vers.-Nr. 4) trat irreversible Agglomeration in der Kristallisationszone auf, die zur Blockierung des Granulatflusses und zum Abbruch des Versuchs führte. Versuch 1 lässt erkennen, dass innerhalb einer Verweilzeit von 8 h im Schachtapparat (Summe aus den Verweilzeiten in der Kristallisationszone und der Entmonomerisierungszone) ein Lactidgehalt von unter 0,2 % nur mit PLA mit einem Schmelzpunkt von 170°C erreichbar ist. Nur in diesem Fall reicht die Kristallisationstemperatur von 150°C auch zur Entmonomerisierung aus. Versuch 3 und 5 in Verbindung mit 2 und 4 zeigen, dass PLA-Schmelzpunkte von 160°C und darunter nur Kristallisations- und Entmonomerisierungstemperaturen erlauben, die nicht ausreichen, einen Lactidgehalt unter 0,2% einzustellen. Solange die Granulattemperatur in der Kristallisationszone gleich wie in der Entmonomerisierungszone ist, verhindert Agglomeration die Einstellung höherer Temperaturen, bei denen ein Restmonomergehalt von weniger als 0,2% erreicht werden könnte.

### Beispiel 3: Entmonomerisierung gemäß Ausführungsform a)

Das Beispiel zeigt die Entmonomerisierung von PLA-Granulat in einem Schachtapparat ohne Vorentmonomerisierung in der Schmelze. Die Ergebnisse sind in der **Tabelle 2** unter den Versuchsnummern **6** und **7** enthalten.

In einer kontinuierlichen Pilotanlage wurde PLA durch ringöffnende Polymerisation von Lactid hergestellt und nach Fig. 1 entmonomerisiert. Monomerhaltige Schmelze wurde mit Hilfe einer Zahnradpumpe aus dem Polymerisationsreaktor in einem Mengenstrom von 20 kg/h abgezogen und einer Unterwasser-Heißabschlag-Granulierung zugeführt. Die Granulierung erzeugte annähernd kugelförmiges PLA-Granulat mit einem mittleren Durchmesser von 2,5 mm. Das Granulat lag im amorphen Zustand vor, erkennbar an der Transparenz der Partikel.

Der Schachtapparat bietet bei einem Durchsatz von 20 kg/h PLA-Granulat eine Verweilzeit von 6 h in der Kristallisationszone und von 10 h in der Entmonomerisierungszone. Wie in Beispiel 2 wurde als Inertgas getrocknete Luft mit einem Taupunkt von - 40°C zugeführt. Wegen der fehlenden Vorentmonomerisierung lag der Lactidgehalt nach der Granulierung etwas über 3 %. Der Rührer lief mit einer Drehzahl von 2/Minute.

Die Granulattemperatur wurde in der Kristallisationszone auf 120°C eingestellt, eine Temperatur, bei der etwa das Maximum der Kristallisationsgeschwindigkeit von PLA liegt. In der folgenden Entmonomerisierungszone wurde die Granulattemperatur durch geeignete Wahl der Temperatur und des Mengenstroms der zugeführten Luft auf eine Temperatur erhöht, die 10°C unter dem Schmelzpunkt der jeweiligen PLA-Type lag. Infolge dieser Temperaturwahl kam es in der Kristallisationszone nicht zu Agglomeratbildung und die Entmonomerisierung konnte bei einer ausreichend hohen Temperatur gefahren werden. Die Ergebnisse der Versuche 6 und 7 zeigen, dass trotz der höheren Anfangskonzentration ein Lactidgehalt von 0,20 % oder darunter in weniger als 20 h Verweilzeit erreichbar war.

### Beispiel 4: Entmonomerisierung gemäß Ausführungsform b)

Das Beispiel zeigt die Entmonomerisierung von PLA-Granulat ohne Vorentmonomerisierung in der Schmelze durch Kristallisation in einem separaten horizontalen Kristallisator mit anschließender Entmonomerisierung in einem vertikalen Schachtapparat gemäß Ausführungsform b). Als Kristallisator wurde eine horizontal angeordnete, um ihre Achse rotierende Drehtrommel verwendet mit innen angeordneten Infrarot-Strahlern zum Aufheizen des Granulats. Die Trommel war auf ihrer Innenseite mit einem aufgeschweißten Spiralband versehen zur Führung des Granulats. Die Verweilzeit des Granulats wurde durch die Wahl der Drehzahl auf 2 h eingestellt. Die Ergebnisse sind in der Tabelle 2 unter der Versuchsnummer **8** enthalten. Wie in Beispiel 3 wurde die Schmelze nicht vorentmonomerisiert.

In einer kontinuierlichen Pilotpolymerisation wurde PLA durch ringöffnende Polymerisation von Lactid hergestellt und im gleichen Schachtapparat wie in Beispiel 2 und 3 entmonomerisiert. Monomerhaltige Schmelze wurde mit Hilfe einer Zahnradpumpe aus dem Polymerisationsreaktor in einem Mengenstrom von 20 kg/h abgezogen und einer Unterwasser-Heißabschlag-Granulierung zugeführt. Die Granulierung erzeugte annähernd kugelförmiges PLA-Granulat mit einem mittleren Durchmesser von 2,5 mm. Das Granulat lag im amorphen Zustand vor, erkennbar an der Transparenz der Partikel.

Der Schachtapparat bietet bei einem Durchsatz von 20 kg/h eine Verweilzeit von 6 h in der Kristallisationszone und von 10 h in der Entmonomerisierungszone. In diesem Beispiel wurden beide Zonen mit derselben Temperatur betrieben und zur Entmonomerisierung verwendet. Die Kristallisationszone des Schachtapparats wurde ohne Rührer betrieben. Wie in Beispiel 2 wurde als Inertgas getrocknete Luft mit einem Taupunkt von - 40°C zugeführt. Wegen der fehlenden Vorentmonomerisierung lag der Lactidgehalt nach der Granulierung etwas über 3 %.

Das Granulat verließ die Granulierung mit 50°C und wurde durch die Beheizung im Drehtrommelkristallisator auf 120°C im Auslauf eingestellt, eine Temperatur, bei der etwa das Maximum der Kristallisationsgeschwindigkeit von PLA liegt. Die Granulattemperatur im Schachtapparat wurde durch geeignete Wahl der Temperatur und des Mengenstroms der zugeführten Luft auf einen Wert eingestellt, der mit 150°C 10°C unter dem Schmelzpunkt des hergestellten PLA-Granulats lag. Infolge der Kristallisation im vorgeschalteten Drehtrommelkristallisator konnte diese Temperatur im gesamten Schachtapparat eingehalten werden. Trotz des Betriebs ohne Rührer kam es zu keiner Agglomeratbildung. Die Entmonomerisierung konnte so bei einer ausreichend hohen Temperatur gefahren werden. Die Ergebnisse des **Versuchs 8** zeigen, dass trotz der höheren Anfangskonzentration auch mit dieser Apparateanordnung ein Lactidgehalt von 0,20 % in weniger als 20 h Verweilzeit erreichbar ist.

## Patentansprüche

1. Verfahren zur Kristallisation eines Granulats und Abtrennung niedermolekularer Komponenten aus einem Granulat eines kristallisationsfähigen thermoplastischen Materials mit einer kristallinen Schmelztemperatur von mindestens 130 °C, gemessen wie in der Beschreiben angegeben, bei dem ein Granulat des kristallisationsfähigen thermoplastischen Materials in einer Kristallisationsstufe zumindest partiell kristallisiert wird und anschließend
in einer Abtrennungsstufe niedermolekulare Komponenten aus dem zumindest partiell kristallisierten Granulat zumindest teilweise abgetrennt werden,
wobei
die Kristallisation und die Abtrennung der niedermolekularen Komponenten bei unterschiedlichen Temperaturen erfolgt, wobei die Kristallisation bei niedrigeren Temperaturen als die Abtrennung erfolgt, wobei das Granulat in der Kristallisationsstufe und der Abtrennungsstufe von einem Gas durchströmt wird, wobei das Gas bevorzugt im Gegenstrom zu einer Förderrichtung des Granulats geführt wird,
**dadurch gekennzeichnet, dass** das Gas zunächst in die Abtrennungsstufe aufgegeben und nach Durchströmen des Granulates in der Abtrennungsstufe der Abtrennungsstufe entnommen und anschließend in die Kristallisationsstufe aufgegeben wird und das Gas das Granulat in der Kristallisationsstufe durchströmt, und das der Abtrennungsstufe entnommene Gas vor Aufgabe in die Kristallisationszone mit einem Gas niedrigerer Temperatur vermischt wird oder abgekühlt wird und das erzeugte Gasgemisch oder das abgekühlte Gas in die Kristallisationsstufe aufgegeben wird.

2. Verfahren nach Anspruch 1, **dadurch gekennzeichnet, dass**
a) die Kristallisation bei einer Temperatur von mindestens 20 K unterhalb der kristallinen Schmelztemperatur des kristallisationsfähigen thermoplastischen Materials, bevorzugt bei einer Temperatur zwischen 80 K bis 20 K unterhalb der kristallinen Schmelztemperatur des kristallisationsfähigen thermoplastischen Materials und/oder
b) die Abtrennung der niedermolekularen Komponenten bei einer Temperatur oberhalb der bei der Kristallisation eingesetzten Temperatur, bevorzugt bei einer Temperatur oberhalb der bei der Kristallisation eingesetzten Temperatur bis zu maximal 5 K unterhalb der kristallinen Schmelztemperatur des kristallisationsfähigen thermoplastischen Materials
durchgeführt wird.

3. Verfahren nach einem der vorhergehenden Ansprüche, wobei das Gas Stickstoff und/oder getrocknete Luft ist, und bevorzugt einen Taupunkt von < -20 °C, besonders bevorzugt von < - 40 °C aufweist.

4. Verfahren nach Anspruch 1, **dadurch gekennzeichnet, dass** das erzeugte Gasgemisch oder das abgekühlte Gas auf eine Temperatur unterhalb von 20 K unterhalb der kristallinen Schmelztemperatur des kristallisationsfähigen thermoplastischen Materials eingestellt wird.

5. Verfahren nach einem der vorhergehenden Ansprüche, **dadurch gekennzeichnet, dass** das Granulat nach Durchlaufen der Abtrennungsstufe in eine Kühlstufe aufgegeben und gekühlt wird, vorzugsweise auf Temperaturen von <80°C, weiter bevorzugt auf < 60 °C, besonders bevorzugt auf < 50 °C.

6. Verfahren nach vorhergehendem Anspruch, **dadurch gekennzeichnet, dass** das Kühlen des Granulats
a) indirekt in einem Rohrbündelwärmetauscher mit einem Gas und/oder einem flüssigen Wärmeträger, dessen Temperatur geringer als die Granulattemperatur ist, bewerkstelligt wird, wobei das Granulat in den Rohren und das Gas im Kreuz-Gegenstrom um die Rohre fließt, oder
b) mittels Durchströmen des Granulates mit einem Gas, dessen Temperatur geringer als die Granulattemperatur ist, bewerkstelligt wird.

7. Verfahren nach vorhergehendem Anspruch, **dadurch gekennzeichnet, dass** das Gas nach Verlassen der Kühlstufe auf eine Temperatur zwischen 20 K unterhalb der kristallinen Schmelztemperatur des kristallisationsfähigen thermoplastischen Materials und maximal 5 K unterhalb der kristallinen Schmelztemperatur des kristallisationsfähigen thermoplastischen Materials erwärmt und in die Abtrennungsstufe aufgegeben wird.

8. Verfahren nach einem der vorhergehenden Ansprüche, **dadurch gekennzeichnet, dass**
a) der Massenstrom des in die Abtrennungsstufe oder die Kühlstufe aufgegebenen Gases mindestens das 2,0 -fache, bevorzugt das 2,5 bis 5,0-fache, besonders bevorzugt das 2,8 bis 3,2-fache des Massenstroms des aufgegebenen Granulats beträgt und/oder
b) die als arithmetisches Produkt des Massenstromes und der spezifischen Wärmekapazität des Gases berechnete Wärmekapazität des in die Abtrennungsstufe oder die Kühlstufe aufgegebenen Gasstromes größer gewählt wird als die als Produkt des Massenstromes und der spezifischen Wärmekapazität des kristallisationsfähigen thermoplastischen Materials berechnete Wärmekapazität des Granulatstromes, bevorzugt das Verhältnis der Wärmekapazität des Gasstromes und der Wärmekapazität des Granulatstromes auf bevorzugt zwischen 1,25 und 2,5 eingestellt wird.

9. Verfahren nach einem der vorhergehenden Ansprüche, **dadurch gekennzeichnet, dass** das Granulat
a) zwischen 0,5 und 10 h, bevorzugt zwischen 1 und 5 h in der Kristallisationsstufe verweilt und/oder die Kristallisation bis zu einem Kristallisationsgrad von 10 bis 80 %, vorzugsweise zwischen 20 und 70 % durchgeführt wird und/oder
b) zwischen 1 und 30 h, bevorzugt zwischen 1 und 10 h in der Abtrennstufe verweilt.

10. Verfahren nach einem der vorhergehenden Ansprüche, **dadurch gekennzeichnet, dass** das Granulat in der Kristallisationsstufe mechanisch bewegt wird, bevorzugt gerührt wird.

11. Verfahren nach einem der vorhergehenden Ansprüche, **dadurch gekennzeichnet, dass** die niedermolekularen Komponenten bis auf einen Gehalt von unter 1 Gew.-%, bevorzugt von unter 0,5 Gew.-%, besonders bevorzugt von unter 0,2 Gew.-% abgetrennt werden.

12. Verfahren nach einem der vorhergehenden Ansprüche, **dadurch gekennzeichnet, dass** das thermoplastische Material ausgewählt ist aus der Gruppe bestehend aus Polymilchsäure und Copolymeren von Milchsäure und die niedermolekularen Komponenten ausgewählt sind aus der Gruppe bestehend aus Lactid, Milchsäure sowie Comonomeren, insbesondere L-Lactid, D-Lactid und meso-Lactid, insbesondere die Polymilchsäure ausgewählt ist aus der Gruppe bestehend aus Poly-L-Milchsäure mit einem maximalen Gehalt von 6 %D- Milchsäureeinheiten oder Poly-D-Milchsäure mit einem maximalen Gehalt von 6 % L-Milchsäureinheiten.

13. Verfahren nach einem der vorhergehenden Ansprüche, **dadurch gekennzeichnet, dass** das das Granulat unmittelbar vor seiner Aufgabe in die Kristallisationszone durch eine Polymerisationsreaktion oder Polykondensationsreaktion in der Schmelze und anschließende Granulation des erhaltenen Polymers als amorphes Granulat hergestellt wird.

14. Verfahren nach vorhergehendem Anspruch, **dadurch gekennzeichnet, dass** in der Schmelze enthaltene niedermolekulare Komponenten vor der Granulation teilweise entfernt werden, insbesondere mittels eines Fallstrangverdampfers, besonders bevorzugt bei gegenüber Normalbedingungen vermindertem Druck.

15. Verfahren nach einem der vorhergehenden Ansprüche, **dadurch gekennzeichnet, dass** der Gasstrom nach Entnahme aus der Kristallisati onsstufe oder der Abtrennstufe einer Aufreinigung unterzogen wird, wobei im Gasstrom enthaltenes niedermolekulares Material zumindest teilweise abgetrennt wird, wobei bevorzugt das aufgereinigte Gas erneut in die Abtrennstufe oder die Kühlstufe aufgegeben wird und/oder abgetrennte niedermolekulare Komponenten zur Herstellung des Polymers wiederverwendet werden.

16. Vorrichtung zur Durchführung einer Kristallisation und Abtrennung niedermolekularer Komponenten aus einem Granulat eines kristallisationsfähigen thermoplastischen Materials, umfassend
a) eine Kristallisationszone (5) für ein Granulat eines kristallisationsfähigen thermoplastischen Materials, die einen Einlass und einen Auslass für das Granulat des kristallisationsfähigen thermoplastischen Materials aufweist,
b) eine Abtrennungszone (7) zur Abtrennung niedermolekularer Komponenten aus dem Granulat des kristallisationsfähigen thermoplastischen Materials, die einen Einlass und einen Auslass für das Granulat des kristallisationsfähigen thermoplastischen Materials aufweist,
wobei die Abtrennungszone (7) der Kristallisationszone (5) nachgeschaltet ist und die Kristallisationszone (5) und die Abtrennungszone (7) derart ausgestaltet sind, dass die Kristallisation und die Abtrennung der niedermolekularen Komponenten bei unterschiedlichen Temperaturen erfolgt, insbesondere die Kristallisation bei niedrigeren Temperaturen durchgeführt wird als die Abtrennung der niedermolekularen Komponenten,
wobei der Granulatauslass der Abtrennungszone (7) in einen Granulateinlass eines Granulatkühlers (9) mündet,
**dadurch gekennzeichnet, dass** der Granulatkühler (9) eine Zufuhr (9a) für das Kühlgas aufweist, wobei der Granulatkühler (9) im Bereich des Granulateinlasses eine Abzugsmöglichkeit (9b) für Gas umfasst, die in eine Zuführung (12) für erwärmtes Gas der Abtrennungszone (7) mündet.

17. Vorrichtung nach dem vorhergehendem Anspruch, **dadurch gekennzeichnet, dass** die Abtrennungszone (7) eine Zuführung (12) für erwärmtes Gas aufweist, die bevorzugt am Granulatauslass der Abtrennungszone (7) oder in der Nähe des Granulatauslasses angeordnet ist, wobei der Zuführung weiter bevorzugt ein Gaserhitzer (12a) vorgeschaltet ist.

18. Vorrichtung nach einem der beiden vorhergehenden Ansprüche, **dadurch gekennzeichnet, dass** die Kristallisationszone (5) und die Abtrennungszone in fluidischer Verbindung (5-7, 7-5) stehen, wobei ein Transport des Granulats (5-7) vom Auslass der Kristallisationszone (5) zum Einlass der Abtrennungszone (7) und ein Transport des Gases (7-5) aus der Abtrennungszone (7) zur Kristallisationszone (5) gewährleistet ist.

19. Vorrichtung nach einem der Ansprüche 16 bis 18, **dadurch gekennzeichnet, dass** die Zuführung (12) am Granulatauslass oder in der Nähe des Granulatauslasses angeordnet ist, wobei der Zuführung bevorzugt ein Gaserhitzer (12a) vorgeschaltet ist, wobei die Abzugsmöglichkeit bevorzugt in den Gaserhitzer (12a) mündet.

20. Vorrichtung nach einem der Ansprüche 16 bis19, **dadurch gekennzeichnet, dass** die Kristallisationszone (5) einen Gasauslass (13) aufweist, der in eine Waschvorrichtung (14) zur Abtrennung niedermolekularer Komponenten aus dem Gasstrom mündet, wobei bevorzugt der Waschvorrichtung (14) ein Gaskühler (19) und/oder ein Flüssigkeitsabscheider (20) und/oder ein Gastrockner (21) nachgeschaltet ist, mittels derer der Gasstrom von Flüssigkeit befreit wird, wobei der Gasstrom nach Abscheiden und/oder Trocknung von Flüssigkeit erneut in den Granulatkühler (9) oder die Kristallisationszone (7) aufgegeben wird.

21. Vorrichtung nach einem der Ansprüche 16 bis 20, **dadurch gekennzeichnet, dass** die Kristallisationszone (5) ein Mittel (6) zur mechanischen Bewegung eines in der Kristallisationszone (5) befindlichen Bettes eines Granulates eines kristallisationsfähigen thermoplastischen Materials aufweist, vorzugsweise einen Granulatrührer (6).

22. Vorrichtung nach einem der Ansprüche 16 bis 21, **dadurch gekennzeichnet, dass**
a) Kristallisationszone (5), Abtrennungszone (7) und bevorzugt der Granulatkühler (9) gemeinsam in einem Sehachtapparat (8) angeordnet sind, wobei bevorzugt Kristallisationszone (5), Abtrennungszone (7) und Granulatkühler (9) vertikal übereinander in einem Sehachtapparat (8) angeordnet sind, wobei die Kristallisationszone (5) mit der Abtrennungszone (7) über ein Lochblech (5a) in Verbindung steht, wobei das Lochblech (5a) konisch ausgestaltet ist und eine mittige Öffnung (5-7) aufweist, über die das Granulat von der Kristallisationszone (5) in die Abtrennungszone (7) überführt werden kann, oder
b) Kristallisationszone (5) und Abtrennungszone (7) getrennt voneinander angeordnet sind und über eine Granulatleitung (5-7) sowie eine Gasleitung (7-5) miteinander in fluidischer Verbindung stehen, wobei bevorzugt Abtrennungszone (7) und Granulatkühler (9) in einem Sehachtapparat angeordnet sind.

23. Vorrichtung nach einem der Ansprüche 16 bis 22, **dadurch gekennzeichnet, dass** dem Granulateinlass der Kristallisationszone (5) eine Granuliervorrichtung (3) zur Erzeugung eines Granulates aus einer Schmelze eines kristallisationsfähigen thermoplastischen Materials vorgeschaltet ist, deren Auslass über eine Granulatleitung (4) mit dem Einlass der Kristallisationszone in fluidischer Verbindung steht, wobei bevorzugt der Granuliervorrichtung (3) ein Reaktor (1) zur Erzeugung einer Schmelze eines kristallisationsfähigen thermoplastischen Materials vorgeschaltet ist, wobei ggf. zwischen Reaktor (1) und Granulator (3) eine Vorrichtung zur teilweisen Abtrennung niedermolekularer Komponenten aus der Schmelze des kristallisationsfähigen thermoplastischen Materials, insbesondere ein Fallstrangverdampfer (100) angeordnet ist.

## Claims

1. A method for crystallizing granules and removing low molecular mass components from the granules of a crystallizable thermoplastic material having a crystalline melting temperature of at least 130°C, measured as indicated in the description, in which
granules of the crystallizable thermoplastic material are at least partially crystallized in a crystallization stage and subsequently
the low molecular mass components are at least partially removed from the at least partially crystallized granules in a removal stage,
wherein
the crystallization and the removal of low molecular occur at different temperatures, wherein the crystallization occurs at lower temperatures than the removal, wherein in the crystallization and removal stages the granules are traversed by a flow of gas, the flow of gas preferably passing countercurrent to a direction along which the granules are conveyed, **characterized in that** the gas is first fed into the removal stage and, after flowing through the granules in the removal stage, is withdrawn from the removal stage and subsequently fed into the crystallization stage where the gas flows through the granules in the crystallization stage, and the gas withdrawn from the removal stage is mixed with a second gas having a lower temperature than the first gas or cooled before being fed into the crystallization stage, and the generated gas mixture or the cooled gas is fed into the crystallization stage.

2. The method of claim 1, **characterized in that**
a) the crystallization takes place at a temperature of at least 20 K below the crystalline melting temperature of the crystallizable thermoplastic material, preferably at a temperature of between 80 K to 20 K below the crystalline melting temperature of the crystallizable thermoplastic material, and/or
b) the removal of the low molecular mass components takes place at a temperature higher than the temperature used during the crystallization, preferably at a temperature higher than the temperature used during the crystallization up to a maximum of 5 K below the crystalline melting temperature of the crystallizable thermoplastic material.

3. The method of one of the preceding claims, wherein the gas is nitrogen and/or dried air, and preferably has a dew point of less than -20°C, particularly preferably of less than -40°C.

4. The method of claim 1, **characterized in that** the generated gas mixture or the cooled gas is adjusted to a temperature of below 20 K below the crystalline melting temperature of the crystallizable thermoplastic material.

5. The method of one of the preceding claims, **characterized in that** the granules, after passing through the removal stage, are fed into a cooling stage and cooled, preferably to a temperature of less than 80°C, more preferably to less than 60°C, particularly preferably to less than 50°C.

6. The method of the preceding claim, **characterized in that** the cooling of the granules is accomplished
a) indirectly in a shell and tube heat exchanger with a gas and/or a liquid heat transfer medium, the temperature of which is lower than a temperature of the granules, wherein the granules flow in tubes and the gas flows cross-countercurrent around the tubes; or
b) by causing a flow of gas, the temperature of which is lower than a temperature of the granules, to traverse the granules.

7. The method of the preceding claim, **characterized in that** the gas, after leaving the cooling stage, is heated to a temperature of between 20 K below the crystalline melting temperature of the crystallizable thermoplastic material and a maximum of 5 K below the crystalline melting temperature of the crystallizable thermoplastic material, and is fed into the removal stage.

8. The method of one of the preceding claims, **characterized in that**
a) a mass flow of the gas fed into the removal stage or the cooling stage is at least 2.0 times, preferably 2.5-5.0 times, particularly preferably 2.8-3.2 times a mass flow of the granules fed in, and/or
b) the heat capacity of the gas flow fed into the removal stage or the cooling stage, calculated as an arithmetic product of the mass flow and the specific heat capacity of the gas, is selected to be greater than the heat capacity of the granule stream, calculated as product of the mass flow and the specific heat capacity of the crystallizable thermoplastic material, preferably the ratio of the heat capacity of the gas flow to the heat capacity of the granule stream is adjusted to preferably between 1.25 and 2.5.

9. The method of one of the preceding claims, **characterized in that** the granules
a) reside for between 0.5 and 10 hours, preferably between 1 and 5 hours, in the crystallization stage and/or the crystallization is performed to a degree of crystallization of 10% to 80%, preferably of 20% to 70%; and/or
b) reside in the removal stage for between 1 and 30 hours, preferably between 1 and 10 hours.

10. The method of one of the preceding claims, **characterized in that** the granules are mechanically moved, preferably by way of stirring, in the crystallization stage.

11. The method of one of the preceding claims, **characterized in that** the low molecular mass components are removed down to a level of below 1% by weight, preferably of below 0.5% by weight, particularly preferably of under 0.2% by weight.

12. The method of one of the preceding claims, **characterized in that** the thermoplastic material is selected from the group comprised of polylactic acid and copolymers of lactic acid, and the low molecular mass components are selected from the group comprised of lactide, lactic acid, and comonomers, in particular L-lactide, D-lactide, and meso-lactide, in particular the polylactic acid being selected from the group comprised of poly-L-lactic acid having a maximum D-lactic acid unit content of 6%, or poly-D-lactic acid having a maximum L-lactic acid unit content of 6%.

13. The method of one of the preceding claims, **characterized in that** the granules are produced as amorphous granules directly before feeding the granules into the crystallization zone, wherein the granules are produced as the amorphous granules by a polymerization reaction or a polycondensation reaction in a melt and subsequent granulation of a resulting polymer.

14. The method of the preceding claim, **characterized in that** the low molecular mass components contained in the melt are partially removed prior to the granulation, in particular by way of a falling strand evaporator, particularly preferably under pressure reduced relative to standard conditions.

15. The method of one of the preceding claims, **characterized in that** the flow of gas is subjected to purifying after withdrawing the gas from the crystallization stage or the removal stage, wherein low molecular mass material contained in the flow of gas is removed at least partially, wherein preferably the purified gas is fed again into the removal stage or the cooling stage, and/or the removed lower molecular mass material is used to produce the polymer.

16. A device for carrying out crystallization and removal of low molecular mass components from granules of a crystallizable thermoplastic material, the device comprising:
a) a crystallization zone (5) for granules of the crystallizable thermoplastic material, the crystallization zone including an inlet and an outlet for the granules of the crystallizable thermoplastic material,
b) a removal zone (7) for removing the lower molecular mass components from the granules of the crystallizable thermoplastic material, the removal zone including an inlet and an outlet for the granules of the crystallizable thermoplastic material,
wherein the removal zone (7) is downstream of the crystallization zone (5), and the crystallization zone (5) and the removal zone (7) are configured such that the crystallization and the removal of lower molecular mass components occur at different temperatures, in particular the crystallization is performed at a lower temperature than the removal of the lower molecular mass components,
wherein the outlet of the granules of the removal zone (7) opens into an inlet of the granules of a granules cooler (9),
**characterized in that** the granules cooler (9) comprises a feed (9a) for a cooling gas, wherein the granules cooler (9) comprises, in a region of the inlet, a take-off facility (9b) for gas that opens into a supply line (12) for heated gas in the removal zone (7).

17. The device of the preceding claim, **characterized in that** the removal zone (7) comprises a supply line (12) for heated gas that is preferably disposed at the outlet of the granules of the removal zone (7) or near the outlet of the granules, wherein, more preferably, a gas heater (12a) is disposed upstream of the supply line.

18. The device of any one of the two preceding claims, **characterized in that** the crystallization zone (5) and the removal zone are in fluidic communication (5-7, 7-5), wherein the granules are transportable (5-7) from the outlet of the crystallization zone (5) to the inlet of the removal zone (7) and the gas is transportable (7-5) from the removal zone (7) to the crystallization zone (5).

19. The device of any one of the claims 16 to 18, **characterized in that** the supply line (12) is disposed at the outlet of the granules or near the outlet of the granules, wherein preferably a gas heater (12a) is disposed upstream of the supply line, wherein the take-off facility preferably opens into the gas heater (12a).

20. The device of any one of the claims 16 to 19, **characterized in that** the crystallization zone (5) includes a gas outlet (13) that opens into a scrubbing device (14) for removing low molecular mass components from the gas stream, wherein preferably a gas cooler (19) and/or a fluid separator (20) and/or a gas dryer (21) are disposed downstream of the scrubbing device (14), by means of which fluid is removed from the flow of gas, wherein after removal and/or drying of fluid, the flow of gas is fed again into the granules cooler (9) or the crystallization zone (7).

21. The device of any one of the claims 16 to 20, **characterized in that** the crystallization zone (5) includes a means (6) for mechanically moving a bed of granules of a crystallizable thermoplastic material located in the crystallization zone (5), preferably a granules stirrer (6).

22. The device of any one of the claims 16 to 21, **characterized in that**
a) the crystallization zone (5), the removal zone (7), and preferably the granules cooler (9) are disposed jointly in a tower apparatus (8), wherein the crystallization zone (5), the removal zone (7), and the granules cooler (9) are disposed vertically to one another within a tower apparatus (8), wherein the crystallization zone (5) is in communication with the removal zone (7) via a perforated plate (5a), the perforated plate (5a) having a conical design and a central opening (5-7) via which the granules are transferable from the crystallization zone (5) into the removal zone (7), or
b) the crystallization zone (5) and the removal zone (7) are disposed separately from one another and are in fluidic communication with one another via a granules line (5-7) and a gas line (7-5), wherein the removal zone (7) and the granules cooler (9) are preferably disposed in a tower apparatus.

23. The device according to one of the claims 16 to 22, **characterized in that** a granulating device (3) for producing granules from a melt of a crystallizable thermoplastic material is disposed upstream of the inlet of the granules of the crystallization zone (5), the outlet of which is in fluid communication via a granules line (4) with the inlet of the crystallization zone, wherein a reactor (1) for producing the melt of the crystallizable thermoplastics material is preferably disposed upstream of the granulating device (3), wherein a device for partial removal of low molecular mass components from the melt of the crystallizable thermoplastic material, in particular a falling strand evaporator (100), is optionally disposed between the reactor (1) and the granulating device (3).

## Revendications

1. Procédé de cristallisation d'un granulé et de séparation de constituants de faible poids moléculaire à partir d'un granulé d'un matériau thermoplastique cristallisable avec une température de fusion cristalline d'au moins 130 °C, mesurée comme indiqué dans la description, chez lequel
un granulé du matériau thermoplastique cristallisable est au moins partiellement cristallisé dans un stade de cristallisation, et ensuite
des constituants de faible poids moléculaire sont séparés au moins partiellement dans un stade de séparation à partir de l'au moins un granulé partiellement cristallisé,
dans lequel
la cristallisation et la séparation des constituants de faible poids moléculaire ont lieu à des températures différentes, dans lequel la cristallisation a lieu à des températures plus basses que la séparation, dans lequel le granulé est traversé par un flux de gaz au stade de cristallisation et au stade de la séparation, dans lequel le gaz est mené de préférence à contre-courant par rapport au sens de transport du granulé, **caractérisé en ce que** le gaz est d'abord appliqué au stade de séparation et est prélevé après la traversée du granulé au stade de séparation du stade de séparation, et ensuite est appliqué au stade de cristallisation et le gaz traverse le granulé au stade de cristallisation, et le gaz prélevé au stade de séparation est mélangé avec un gaz à une température plus basse ou est refroidi avant l'application dans la zone de cristallisation et le mélange de gaz généré ou le gaz refroidi est appliqué au stade de cristallisation.

2. Procédé selon la revendication 1, **caractérisé en ce que**
a) la cristallisation est effectuée à une température d'au moins 20 K en dessous de la température de fusion cristalline du matériau thermoplastique cristallisable, de préférence, à une température entre 80 K à 20 K en dessous de la température de fusion cristalline du matériau thermoplastique cristallisable, et/ou
b) la séparation des constituants de faible poids moléculaire est effectuée à une température au dessus de la température employée lors de la cristallisation, de préférence à une température au dessus de la température employée lors de la cristallisation jusqu'au maximum 5 K en dessous de la température de fusion cristalline du matériau thermoplastique cristallisable.

3. Procédé selon l'une des revendications précédentes, dans lequel le gaz est de l'azote et/ou de l'air sec, et présente de préférence un point de rosée < -20 °C, de manière particulièrement préférée < -40 °C.

4. Procédé selon la revendication 1, **caractérisé en ce que** le mélange gazeux généré ou le gaz refroidi est réglé à une température en dessous de 20 K en dessous de la température de fusion cristalline du matériau thermoplastique cristallisable.

5. Procédé selon l'une des revendications précédentes, **caractérisé en ce que**, après le déroulement du stade de séparation, le granulé est introduit dans un stade de refroidissement et refroidi, de préférence à des températures < 80 °C, plus préférentiellement < 60 °C, de manière particulièrement préférée < 50 °C.

6. Procédé selon la revendication précédente, **caractérisé en ce que** le refroidissement du granulé
a) est réalisé de manière indirecte avec un échangeur thermique à tube et à calandre avec un gaz et/ou fluide caloporteur dont la température est inférieure à la température du granulé, dans lequel le granulé s'écoule dans les tuyaux à contre-courant et à courant croisé autour des tuyaux, ou
b) est réalisé au moyen d'une traversée du granulé avec un flux gazeux dont la température est inférieure à la température du granulé.

7. Procédé selon la revendication précédente, **caractérisé en ce que** le gaz est réchauffé après avoir quitté le stade de refroidissement à une température entre 20 K en dessous de la température de fusion cristalline du matériau thermoplastique cristallisable et au maximum 5 K en dessous de la température de fusion cristalline du matériau thermoplastique cristallisable, et est laissé au stade de séparation.

8. Procédé selon l'une des revendications précédentes, **caractérisé en ce que**
a) le flux massique du gaz appliqué au stade de séparation ou au stade de refroidissement est au moins 2,0 fois, de préférence de 2,5 à 5,0 fois, de manière particulièrement préférée, de 2,8 à 3,2 fois équivalent au flux massique du granulé laissé, et/ou
b) la capacité thermique calculée sous la forme du produit arithmétique du flux massique et de capacité thermique spécifique du gaz du flux gazeux laissé au stade de séparation ou au stade de refroidissement est choisie plus grande que la capacité thermique du flux de granulé calculée sous la forme du produit du flux massique et de la capacité thermique spécifique du matériau thermoplastique cristallisable, de préférence, le rapport de la capacité thermique du flux gazeux et la capacité thermique du flux de granulé est de préférence réglé entre 1,25 et 2,5.

9. Procédé selon l'une des revendications précédentes, **caractérisé en ce que** le granulé reste
a) entre 0,5 et 10 h, de préférence, entre 1 et 5 h au stade de cristallisation, et/ou la cristallisation est effectuée jusqu'à un degré de cristallisation de 10 à 80 %, de préférence entre 20 et 70 %, et/ou reste
b) entre 1 et 30 h, de préférence, entre 1 et 10 h au stade de séparation.

10. Procédé selon l'une des revendications précédentes, **caractérisé en ce que** le granulé est déplacé mécaniquement dans le stade de cristallisation, de préférence, est agité.

11. Procédé selon l'une des revendications précédentes, **caractérisé en ce que** les constituants de faible poids moléculaire sont séparés jusqu'à une teneur inférieure à 1 % en poids, de préférence inférieure à 0,5 % en poids, de manière particulièrement préférée, inférieure à 0,2 % en poids.

12. Procédé selon l'une des revendications précédentes, **caractérisé en ce que** le matériau thermoplastique est choisi dans le groupe constitué de l'acide polylactique et de copolymères d'acide lactique et les constituants de faible poids moléculaire sont choisis dans le groupe constitué du lactide, de l'acide lactide ainsi que de co-monomères, notamment le L-lactide, le D-lactide et le méso-lactide, en particulier, l'acide polylactique est choisi dans le groupe constitué de l'acide poly-L-lactique avec une teneur maximale de 6 % d'unités d'acide D-lactique ou de l'acide poly-D-lactique avec une teneur maximale de 6 % d'unités d'acide L-lactique.

13. Procédé selon l'une des revendications précédentes, **caractérisé en ce que** le granulé est fabriqué immédiatement avant son application dans la zone de cristallisation par une réaction de polymérisation ou une réaction de polycondensation dans le produit fondu et la granulation ultérieure du polymère obtenue sous la forme de granulé amorphe.

14. Procédé selon la revendication précédente, **caractérisé en ce que** des constituants de faible poids moléculaire obtenus dans le produit fondu sont séparés partiellement avant la granulation, notamment au moyen d'un évaporateur à flot tombant, de manière particulièrement préférée à une pression diminuée par rapport aux conditions normales.

15. Procédé selon l'une des revendications précédentes, **caractérisé en ce que** le flux gazeux, après le prélèvement dans le stade de cristallisation ou dans le stade de séparation, est soumis à un nettoyage, dans lequel les matières de bas poids moléculaire contenues dans le flux gazeux sont partiellement séparées, dans lequel le gaz nettoyé est de préférence de nouveau laissé dans le stade de séparation ou dans le stade de refroidissement, et/ou des constituants de faible poids moléculaire séparés sont de nouveau employés pour la fabrication du polymère.

16. Dispositif de réalisation d'une cristallisation et d'une séparation de constituants de faible poids moléculaire à partir d'un granulé d'un matériau thermoplastique cristallisable, comprenant
a) une zone de cristallisation (5) pour un granulé d'un matériau thermoplastique cristallisable, qui présente une entrée et une sortie pour le granulé du matériau thermoplastique cristallisable,
b) une zone de séparation (7) pour la séparation de constituants de faible poids moléculaire à partir du granulé du matériau thermoplastique cristallisable, qui présente une entrée et une sortie pour le granulé du matériau thermoplastique cristallisable,
dans lequel la zone de séparation (7) est placée derrière la zone de cristallisation (5), et la zone de cristallisation (5) et la zone de séparation (7) sont conçues de telle manière que la cristallisation et la séparation des constituants de faible poids moléculaire aient lieu à des températures différentes, la cristallisation est notamment effectuée à des températures plus basses que la séparation des constituants de faible poids moléculaire,
dans lequel la sortie de granulé de la zone de séparation (7) débouche dans une entrée de granulé d'un refroidisseur de granulé (9),
**caractérisé en ce que** le refroidisseur de granulé (9) présente une amenée (9a) pour le gaz de refroidissement, dans lequel le refroidisseur de granulé(9) comprend un système de ventilation (9b) pour le gaz dans la région de l'entrée de granulé qui débouche dans un passage (12) pour le gaz réchauffé de la zone de séparation (7).

17. Dispositif selon la revendication précédente, **caractérisé en ce que** la zone de séparation (7) présente un passage (12) pour le gaz réchauffé, qui est de préférence disposé à la sortie de granulé de la zone de séparation (7) ou au voisinage de la sortie de granulé, dans lequel le passage est placé de manière encore préférée avant un réchauffeur de gaz (12a).

18. Dispositif selon l'une des deux revendications précédentes, **caractérisé en ce que** la zone de cristallisation (5) et la zone de séparation sont placées en communication fluidique (5-7, 7-5), dans lequel un transport du granulé (5-7) de la sortie de la zone de cristallisation (5) vers l'entrée de la zone de séparation (7) et un transport du gaz (7-5) de la zone de séparation (7) vers la zone de cristallisation (5) est réalisé.

19. Dispositif selon l'une des revendications 16 à 18, **caractérisé en ce que** le passage (12) est disposé au niveau de la sortie de granulé ou au voisinage de la sortie de granulé, dans lequel le passage est placé de préférence avant un réchauffeur de gaz (12a), dans lequel le moyen de ventilation débouche de préférence dans le réchauffeur de gaz (12a).

20. Dispositif selon l'une des revendications 16 à 19, **caractérisé en ce que** la zone de cristallisation (5) présente une sortie de gaz (13) qui débouche dans un dispositif de lavage (14) pour la séparation de constituants de faible poids moléculaire, dans lequel, de préférence, un refroidisseur de gaz (19), et/ou un séparateur de liquide (20), et/ou un sécheur de gaz (21) sont placés derrière le dispositif de lavage (14), au moyen desquels le flux gazeux est débarrassé des liquides, dans lequel le flux gazeux est de nouveau laissé dans le refroidisseur de granulé (9) ou dans la zone de cristallisation (7) après la séparation et/ou le séchage par rapport aux liquides.

21. Dispositif selon l'une des revendications 16 à 20, **caractérisé en ce que** la zone de cristallisation (5) présente un moyen (6) permettant le déplacement mécanique d'un lit de granulé de matériau thermoplastique cristallisable se trouvant dans la zone de cristallisation (5), de préférence, un agitateur de granulé (6).

22. Dispositif selon l'une des revendications 16 à 21, **caractérisé en ce que**
a) la zone de cristallisation (5), la zone de séparation (7) et de préférence le refroidisseur de granulé (9) sont disposés ensemble dans un appareil sous forme de puits (8), dans lequel, de préférence, la zone de cristallisation (5), la zone de séparation (7) et le refroidisseur de granulé (9) sont disposés verticalement les uns sur les autres dans un appareil sous forme de puits (8), dans lequel la zone de cristallisation (5) est en communication avec la zone de séparation (7) par le biais d'une tôle trouée (5a), dans lequel la tôle trouée (5a) est conçue en cône et présente un orifice central (5-7), par le biais duquel le granulé peut être transféré de la zone de cristallisation (5) vers la zone de séparation (7), ou
b) la zone de cristallisation (5) et la zone de séparation (7) sont disposées séparées l'une de l'autre et sont en liaison fluidique l'une avec l'autre par le biais d'une conduite de granulé (5-7) ainsi que d'une conduite de gaz (7-5), dans lequel, de préférence, la zone de séparation (7) et le refroidisseur de granulé (9) sont disposés dans un appareil sous forme de puits.

23. Dispositif selon l'une des revendications 16 à 22, **caractérisé en ce qu'**un dispositif de granulation (3) est placé avant l'entrée de granulé de la zone de cristallisation (5) pour la génération d'un granulé à partir d'un produit fondu d'un matériau thermoplastique cristallisable, dont la sortie est en liaison fluidique avec l'entrée de la zone de cristallisation par le biais de la conduite de granulé (4), dans lequel, de préférence, un réacteur (1) est placé devant le dispositif de granulation (3) pour la génération d'un produit fondu d'un matériau thermoplastique cristallisable, dans lequel, éventuellement, un dispositif pour la séparation partielle de constituants de faible poids moléculaire à partir du produit fondu du matériau thermoplastique cristallisable est disposé entre le réacteur (1) et la granulateur (3), notamment un évaporateur à flot tombant (100).
